# EUROPEAN PATENT APPLICATION

(11) **EP 4 492 868 A1**
(43) Date of publication of application: **15.01.2025**
(21) Application number: 23778215.6
(22) Date of filing: 28.03.2023
(51) Int. Cl.: H04W 40/18, H04W 40/02, H04W 40/24, H04W 76/10, H04W 24/02, H04L 45/302, H04L 45/00, H04L 45/30

(54) **URSP RULE OPTIMIZATION METHODS AND APPARATUSES, TERMINAL, NETWORK SIDE DEVICE AND MEDIUM**

(30) Priority: 28.03.2022 CN 202210317246
(71) Applicant: VIVO MOBILE COMMUNICATION CO., LTD., Dongguan, Guangdong 523863 (CN)
(72) Inventor: LV, Huazhang, Dongguan, Guangdong 523863 (CN); CHONG, Weiwei, Dongguan, Guangdong 523863 (CN)
(74) Representative: Murgitroyd & Company
(86) International application number: PCT/CN2023/084399
(87) International publication number: WO 2023/185850

(57) **Abstract**

The present disclosure discloses a URSP rule optimization method, where the URSP rule optimization method in embodiments of the present disclosure includes: A first communication device re-evaluates a first URSP rule of a terminal based on target information, to obtain a second URSP rule. The first communication device sends a first message to the terminal. The target information includes at least one of the following: a first analytics result, a first evaluation request, and an abnormality indication. The first analytics result is an analytics result and/or a prediction result requested by the first communication device, the first evaluation request is used for the terminal to request a re-evaluation on the first URSP rule, and the abnormality indication indicates that the first URSP rule is executed abnormally. The first message includes the second URSP rule. The second URSP rule is used for the terminal to select and/or establish a PDU session for traffic of an application.

## Description

### CROSS-REFERENCE TO RELATED APPLICATIONS

This application claims priority to Chinese Patent Application No. 202210317246.6 filed on March 28, 2022, which is incorporated herein by reference in its entirety.

### TECHNICAL FIELD

The present disclosure relates to the field of communication technologies, and in particular, to a URSP rule optimization method and apparatus, a terminal, a network side device, and a medium.

### BACKGROUND

A user equipment route selection policy (URSP) rule is a policy that is defined in the 3rd generation partnership project (3GPP) protocol for a terminal to select and/or establish a protocol data unit (PDU) session. At present, the terminal may match obtained traffic characteristics associated with an application with a traffic descriptor in the URSP rule according to the URSP rule, and then select and/or establish the corresponding PDU session for the application based on a route selection descriptor (RSD) of the successfully matched traffic descriptor. How to optimize the URSP rule through artificial intelligence technology, to intelligently select and/or establish the PDU session for the application has become an urgent problem to be solved.

### SUMMARY

Embodiments of the present disclosure provide a URSP rule optimization method and apparatus, a terminal, a network side device, and a medium, which can optimize a URSP rule of the terminal through artificial intelligence technology, to intelligently select and/or establish a PDU session for an application.

According to a first aspect, a URSP rule optimization method is provided, and the method includes: A first communication device re-evaluates a first URSP rule of a terminal based on target information, to obtain a second URSP rule. The first communication device sends a first message to the terminal. The target information includes at least one of the following: a first analytics result, a first evaluation request, and an abnormality indication. The first analytics result is an analytics result and/or a prediction result requested by the first communication device, the first evaluation request is used for the terminal to request a re-evaluation on the first URSP rule, and the abnormality indication indicates that the first URSP rule is executed abnormally. The first message includes the second URSP rule. The second URSP rule is used for the terminal to select and/or establish a PDU session for traffic of an application.

According to a second aspect, a URSP rule optimization method is provided, and the method includes: A terminal receives a first message from a first communication device, where the first message includes a second URSP rule. The terminal selects and/or establishes a PDU session for traffic of an application according to the second URSP rule. The second URSP rule is: a URSP rule obtained after a first URSP rule of the terminal is re-evaluated.

According to a third aspect, a URSP rule optimization method is provided, and the method includes: A second communication device receives a target message from a target device, where the target message includes a target analytics identifier, and the target message is used for the target device to obtain an analytics result and/or a prediction result corresponding to the target analytics identifier. The second communication device obtains a target analytics result based on the target analytics identifier. The second communication device sends the target analytics result to the target device, where the target analytics result is used for the target device to re-evaluate a first URSP rule of a terminal.

According to a fourth aspect, a URSP rule optimization method is provided, and the method includes: A third communication device receives a fourth message from a first communication device, where the fourth message includes a first URSP rule of a terminal. The third communication device evaluates execution of the first URSP rule according to the first URSP rule.

According to a fifth aspect, a URSP rule optimization method is provided, and the method includes: A fourth communication device receives an eighth message from a third communication device, where the eighth message includes a target PDU session identifier. The fourth communication device evaluates execution of a first URSP rule of a terminal in a target PDU session corresponding to the target PDU session identifier. The fourth communication device sends a ninth message to the third communication device. The target PDU session is a PDU session in which traffic of a target application should not exist. The traffic of the target application is traffic for a PDU session matched by the terminal according to the first URSP rule. The ninth message indicates that the first URSP rule is executed abnormally.

According to a sixth aspect, a URSP rule optimization apparatus is provided, and the apparatus includes: a processing module, configured to re-evaluate a first URSP rule of a terminal based on target information, to obtain a second URSP rule; and a sending module, configured to send a first message to a terminal, where the target information includes at least one of the following: a first analytics result, a first evaluation request, and an abnormality indication; the first analytics result is an analytics result and/or a prediction result requested by a first communication device, the first evaluation request is used for the terminal to request a re-evaluation on the first URSP rule, and the abnormality indication indicates that the first URSP rule is executed abnormally; and the first message includes the second URSP rule, and the second URSP rule is used for the terminal to select and/or establish a PDU session for traffic of an application.

According to a seventh aspect, a URSP rule optimization apparatus is provided, and the apparatus includes: a receiving module, configured to receive a first message from a first communication device, where the first message includes a second URSP rule; and a processing module, configured to select and/or establish a PDU session for traffic of an application according to the second URSP rule, where the second URSP rule is: a URSP rule obtained after a first URSP rule of the terminal is re-evaluated.

According to an eighth aspect, a URSP rule optimization apparatus is provided, and the apparatus includes: a receiving module, configured to receive a target message from a target device, where the target message includes a target analytics identifier, and the target message is used for the target device to obtain an analytics result and/or a prediction result corresponding to the target analytics identifier; a processing module, configured to obtain a target analytics result based on the target analytics identifier; and a sending module, configured to send the target analytics result to the target device, where the target analytics result is used for the target device to re-evaluate a first URSP rule of a terminal.

According to a ninth aspect, a URSP rule optimization apparatus is provided, and the apparatus includes: a receiving module, configured to receive a fourth message from a first communication device, where the fourth message includes a first URSP rule of a terminal; and a processing module, configured to evaluate execution of the first URSP rule according to the first URSP rule.

According to a tenth aspect, a URSP rule optimization apparatus is provided, and the apparatus includes: a receiving module, configured to receive an eighth message from a third communication device, where the eighth message includes a target PDU session identifier; a processing module, configured to evaluate execution of a first URSP rule of a terminal in a target PDU session corresponding to the target PDU session identifier; and a sending module, configured to send a ninth message to the third communication device, where the target PDU session is a PDU session in which traffic of a target application should not exist; the traffic of the target application is traffic for a PDU session matched by the terminal according to the first URSP rule; and the ninth message indicates that the first URSP rule is executed abnormally.

According to an eleventh aspect, a terminal is provided. The terminal includes a processor and a memory, the memory stores a program or an instruction executable on the processor, and the program or the instruction is executed by the processor to implement steps of the method according to the second aspect.

According to a twelfth aspect, a terminal is provided, including a processor and a communication interface, where the communication interface is configured to receive a first message from a first communication device, and the first message includes a second URSP rule; and the processor is configured to select and/or establish a PDU session for traffic of an application according to the second URSP rule, where the second URSP rule is: a URSP rule obtained after a first URSP rule of the terminal is re-evaluated.

According to a thirteenth aspect, a network side device is provided. The network side device includes a processor and a memory, the memory stores a program or an instruction executable on the processor, and the program or the instruction is executed by the processor to implement the steps of the method according to the first aspect, the third aspect, the fourth aspect, or the fifth aspect.

According to a fourteenth aspect, a first communication device is provided, including a processor and a communication interface, where the processor is configured to re-evaluate a first URSP rule of a terminal based on target information, to obtain a second URSP rule; and the communication interface is configured to send a first message to the terminal. The target information includes at least one of the following: a first analytics result, a first evaluation request, and an abnormality indication; the first analytics result is an analytics result and/or a prediction result requested by a first communication device, the first evaluation request is used for the terminal to request a re-evaluation on the first URSP rule, and the abnormality indication indicates that the first URSP rule is executed abnormally; the first message includes the second URSP rule; and the second URSP rule is used for the terminal to select and/or establish a PDU session for traffic of an application.

According to a fifteenth aspect, a second communication device is provided, including a processor and a communication interface, where the communication interface is configured to receive a target message from a target device, the target message includes a target analytics identifier, and the target message is used for the target device to obtain an analytics result and/or a prediction result corresponding to the target analytics identifier; the processor is configured to obtain a target analytics result based on the target analytics identifier; and the communication interface is further configured to send the target analytics result to the target device, where the target analytics result is used for the target device to re-evaluate a first URSP rule of a terminal.

According to a sixteenth aspect, a third communication device is provided, including a processor and a communication interface, where the communication interface is configured to receive a fourth message from a first communication device, and the fourth message includes a first URSP rule of a terminal; and the processor is configured to evaluate execution of the first URSP rule according to the first URSP rule.

According to a seventeenth aspect, a third communication device is provided, including a processor and a communication interface, where the communication interface is configured to receive an eighth message from the third communication device, and the eighth message includes a target PDU session identifier; the processor is configured to evaluate execution of a first URSP rule of a terminal in a target PDU session corresponding to the target PDU session identifier; and the communication interface is further configured to send a ninth message to the third communication device, where the target PDU session is a PDU session in which traffic of a target application should not exist; the traffic of the target application is traffic for a PDU session matched by the terminal according to the first URSP rule; and the ninth message indicates that the first URSP rule is executed abnormally.

According to an eighteenth aspect, a communication system is provided, and the communication system includes: a terminal and a network side device, where the terminal may be configured to perform the steps of the URSP rule optimization method according to the second aspect; and the network side device may be configured to perform the steps of the URSP rule optimization method according to the first aspect, the steps of the URSP rule optimization method according to the third aspect, the steps of the URSP rule optimization method according to the fourth aspect, or the steps of the URSP rule optimization method according to the fifth aspect.

According to a nineteenth aspect, a readable storage medium is provided. The readable storage medium stores a program or an instruction, and the program or the instruction is executed by a processor to implement the steps of the method according to the first aspect, the steps of the method according to the second aspect, the steps of the method according to the third aspect, the steps of the method according to the fourth aspect, or the steps of the method according to the fifth aspect.

According to a twentieth aspect, a chip is provided. The chip includes a processor and a communication interface, the communication interface is coupled to the processor, and the processor is configured to run a program or an instruction, to implement the method according to the first aspect, the method according to the second aspect, the method according to the third aspect, the method according to the fourth aspect, or the method according to the fifth aspect.

According to a twenty-first aspect, a computer program/program product is provided. The computer program/program product is stored in a storage medium, and the computer program/program product is executed by at least one processor, to implement the steps of the method according to the first aspect, the steps of the method according to the second aspect, the steps of the method according to the third aspect, the steps of the method according to the fourth aspect, or the steps of the method according to the fifth aspect.

In the embodiments of the present disclosure, in a process that the terminal selects and/or establishes the PDU session for the traffic of the application, the first communication device may re-evaluate the first URSP rule of the terminal based on at least one of the first analytics result, the first evaluation request, and the abnormality indication, to obtain the second URSP rule. Then the first communication device sends the second URSP rule to the terminal, so that the terminal selects and/or establishes the PDU session for the traffic of the application according to the second URSP rule. In this way, the terminal may more intelligently select and/or establish the PDU session for the traffic of the application according to an optimized URSP rule, thereby matching the traffic of the application to a PDU session with better performance.

### BRIEF DESCRIPTION OF THE DRAWINGS

FIG. 1 is a schematic diagram of a possible architecture of a communication system according to an embodiment of the present disclosure;
FIG. 2 is a first schematic flowchart of a URSP rule optimization method according to an embodiment of the present disclosure;
FIG. 3 is a second schematic flowchart of a URSP rule optimization method according to an embodiment of the present disclosure;
FIG. 4 is a third schematic flowchart of a URSP rule optimization method according to an embodiment of the present disclosure;
FIG. 5 is a fourth schematic flowchart of a URSP rule optimization method according to an embodiment of the present disclosure;
FIG. 6 is a fifth schematic flowchart of a URSP rule optimization method according to an embodiment of the present disclosure;
FIG. 7 is a sixth schematic flowchart of a URSP rule optimization method according to an embodiment of the present disclosure;
FIG. 8 is a seventh schematic flowchart of a URSP rule optimization method according to an embodiment of the present disclosure;
FIG. 9 is an eighth schematic flowchart of a URSP rule optimization method according to an embodiment of the present disclosure;
FIG. 10 is a first schematic diagram of a structure of a URSP rule optimization apparatus according to an embodiment of the present disclosure;
FIG. 11 is a second schematic diagram of a structure of a URSP rule optimization apparatus according to an embodiment of the present disclosure;
FIG. 12 is a third schematic diagram of a structure of a URSP rule optimization apparatus according to an embodiment of the present disclosure;
FIG. 13 is a fourth schematic diagram of a structure of a URSP rule optimization apparatus according to an embodiment of the present disclosure;
FIG. 14 is a fifth schematic diagram of a structure of a URSP rule optimization apparatus according to an embodiment of the present disclosure;
FIG. 15 is a schematic diagram of a structure of a communication device according to an embodiment of the present disclosure;
FIG. 16 is a schematic diagram of a hardware structure of a terminal according to an embodiment of the present disclosure; and
FIG. 17 is a schematic diagram of a structure of a network side device according to an embodiment of the present disclosure.

### DETAILED DESCRIPTION

The following clearly describes the technical solutions in the embodiments of the present disclosure with reference to the accompanying drawings in the embodiments of the present disclosure. Apparently, the described embodiments are some but not all of the embodiments of the present disclosure. All other embodiments obtained by a person of ordinary skill in the art based on the embodiments of the present disclosure shall fall within the protection scope of the present disclosure.

The terms "first", "second", and the like in the specification and claims of the present disclosure are used to distinguish between similar objects instead of describing a specific order or sequence. It should be understood that, the terms used in such a way are interchangeable in proper circumstances, so that the embodiments of the present disclosure can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and the character "/" generally represents an "or" relationship between associated objects.

It should be noted that technologies described in the embodiments of the present disclosure are not limited to a Long Time Evolution (LTE)/LTE-Advanced (LTE-A) system, and may further be applied to other wireless communication systems such as Code Division Multiple Access (CDMA), Time Division Multiple Access (TDMA), Frequency Division Multiple Access (FDMA), Orthogonal Frequency Division Multiple Access (OFDMA), single-carrier frequency division multiple access (SC-FDMA), and other systems. The terms "system" and "network" in the embodiments of the present disclosure may be used interchangeably. The described technologies can be applied to both the systems and the radio technologies mentioned above as well as to other systems and radio technologies. The following descriptions describe a new radio (NR) system for example purposes, and NR terms are used in most of the following descriptions, but these technologies can also be applied to an application other than an NR system application, for example, a 6^{th} generation (6G) communication system.

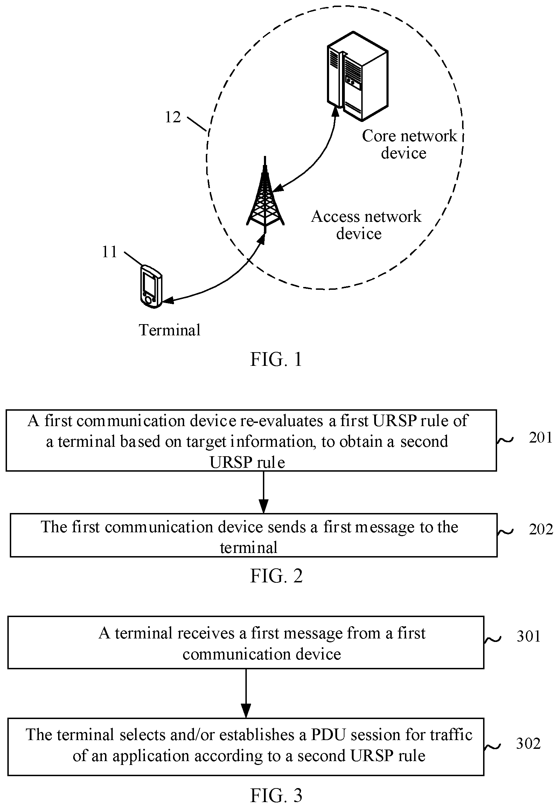

FIG. 1 is a block diagram of a wireless communication system to which embodiments of the present disclosure can be applied. The wireless communication system includes a terminal 11 and a network side device 12. The terminal 11 may be a terminal side device such as a mobile phone, a tablet personal computer), a laptop computer or a notebook computer, a personal digital assistant (PDA), a palmtop computer, a netbook, an ultra-mobile personal computer UMPC), a mobile Internet device (MID), an augmented reality (AR)/virtual reality (VR) device, a robot, a wearable device, vehicle user equipment (VUE), pedestrian user equipment (PUE), smart household (household devices with wireless communication functions, such as a refrigerator, a television, a washing machine, or furniture), a game console, a personal computer (PC), a teller machine, or a self-service machine, and the wearable device includes a smart watch, a smart band, smart earphones, smart glasses, smart jewelry (a smart bracelet, a smart hand chain, a smart ring, a smart necklace, a smart bangle, a smart anklet, or the like), a smart wristband, smart clothes, and the like. It should be noted that, a specific type of the terminal 11 is not limited in the embodiments of the present disclosure. The network side device 12 may include an access network device or a core network device. The access network device 12 may also be referred to as a radio access network device, a radio access network (RAN), a radio access network function, or a radio access network unit. The access network device 12 may include a base station, a WLAN access node, a Wi-Fi node, or the like. The base station may be referred to as a NodeB, an evolved NodeB (eNB), an access point, a base transceiver station (BTS), a radio base station, a radio transceiver, a basic service set (BSS), an extended service set (ESS), a home NodeB, a home evolved NodeB, a transmitting receiving point (TRP), or another appropriate term in the art. As long as a same technical effect is achieved, the base station is not limited to a specified technical term. It should be noted that, in the embodiments of the present disclosure, only a base station in an NR system is used as an example, but a specific type of the base station is not limited. The core network device may include but is not limited to at least one of the following: a core network node, a core network function, a mobility management entity (MME), an access and mobility management function (AMF), a session management function (SMF), a user plane function (UPF), a policy control function (PCF), a policy and charging rules function (PCRF) unit, an edge application server discovery function (EASDF), unified data management (UDM), unified data repository (UDR), a home subscriber server (HSS), a centralized network configuration (CNC), a network repository function (NRF), a network exposure function (NEF), a local NEF (L-NEF), a binding support function (BSF), and an application function (AF). It should be noted that, in the embodiments of the present disclosure, the core network device in the NR system is merely used as an example for description, but a specific type of the core network device is not limited.

The following describes some concepts and/or terms related in the URSP rule optimization method provided in the embodiments of the present disclosure.

### 1. URSP rule

The URSP rule is a policy that is defined in the 3GPP protocol for a terminal (such as user equipment (UE)) to select and/or establish a PDU session. According to the URSP rule, the terminal may match traffic of an application to a specific PDU session.

For example, when an application in the terminal requires to send traffic to a server side, the application may send traffic characteristics of the application to the terminal, including but not limited to a destination Internet protocol (IP) address, a fully qualified domain name (FQDN), and the like, and then the terminal matches URSP rules of the terminal with the traffic characteristics of the application one by one. In the URSP rule, specified traffic characteristics include the following traffic descriptors:
1) application descriptors: mainly including an operating system (OS) identifier and an operating system application identifier (OS application identifier, OSAPPID);
2) IP descriptors: a destination IP 3 tuple (an IP address or an IPv6 network prefix, a port number, and a protocol ID of a protocol above IP);
3) domain descriptors: an FQDN or a regular expression used as a domain name matching criteria, mainly the FQDN;
4) non-IP descriptors: descriptors of destination information of non-IP traffic;
5) data network name (DNN): this is matched against DNN information provided by the application and is used to describe a data network that the application traffic accesses or connects to; and
6) connection capabilities: this is matched against information provided by the application when requesting a network connection with certain capabilities, such as "an IP multimedia subsystem (IMS)", "a multimedia messaging service (MMS)", and "Internet".

In a case that the traffic characteristic sent by the application to the terminal is an IP descriptor (for example, the destination IP 3 tuple), the IP descriptor indicates that the traffic of the application needs to be sent to a PDU session with a destination IP = 10.1.1.1 and a port number of 80. If the traffic descriptor exists in the URSP rule of the terminal, the traffic characteristic of the application matches a URSP rule.

After the traffic characteristics of the application match the URSP rule, a next step is to select a PDU session to send the traffic of the application. Generally, one traffic descriptor includes a plurality of route selection descriptor (RSD), and each RSD represents a set of attributes or parameters of a PDU session. When the traffic of the application matches a set of traffic descriptors with the destination IP = 10.1.1.1 and the port number of 80, this set of traffic descriptors include the following RSD (merely an example for description):
1) RSD precedence = 1: single network slice selection assistance information (S-NSSAI)-a, non-3GPP access; and
2) RSD precedence = 2: S-NSSAI-a, 3GPP access, DNN = Internet, session and service continuity (SSC) mode = 3.

The terminal may select and/or establish a PDU session for the traffic of the application based on the RSD precedence. For example, the terminal may match the traffic of the application with a PDU session corresponding to RSD precedence = 1, and characteristics of the PDU session corresponding to RSD precedence = 1 are as follows: S-NSSAI = S-NSSAI-a, non-3GPP access.

### 2. Network data analytics function (NWDAF)

At present, the NWDAF is introduced into the 3GPP protocol for some intelligent analytics. The NWDAF has certain intelligent analytics function. A result is obtained by collecting some data and analyzing the data by using built-in algorithms and analytics capabilities, and the result is provided to the 5G core network element for some operation optimization or statistical analytics.

For example, the NWDAF can provide an observation service experience analytics function. Statistical information is output by collecting quality of service (QoS) information of a terminal accessing a server, such as an uplink rate or a downlink rate, a packet loss rate, and the like. The statistical information includes user experience of the terminal accessing the server. Alternatively, the NWDAF may make a prediction based on historical experience of the terminal accessing the server, for example, in a specific area and a specific period of time in the future, if the terminal accesses the server, what user experience (such as QoS) the terminal may obtain.

Generally, analytic content and/or prediction content that the NWDAF can provide are distinguished based on an analytics ID. Different analytics IDs and some parameters are sent to the NWDAF, so that the NWDAF may provide corresponding analytics results and/or prediction results. For example, if analytics ID = Service Experience, the NWDAF provides observation service experience analytics. Therefore, as long as a network function with NWDAF is obtained, and the analytics ID is input when requesting analytics or prediction, the NWDAF may provide corresponding analytics results and/or prediction results. At present, the analytics or prediction results corresponding to the analytics ID that the NWDAF can provide are shown in Table 1.

**Table 1 Analytics identifiers and corresponding analytics results**

| Analytics ID | Analytics Result |
|---|---|
| Load level information | Slice load level related network data analytics |
| Service Experience | Observed Service Experience related network data analytics |
| Network function load information (NF load information) | Network function load analytics |
| Network Performance | Network performance analytics |
| UE Mobility | mobility of terminal analytics |
| UE Communication | UE communication analytics |
| UE Mobility and/or UE Communication | Network data analytics related to predicted terminal behaviour parameters |
| Abnormal behaviour | Network data analytics related to abnormal behaviour |
| User Data Congestion | User data congestion analytics |
| Quality of service sustainability (QoS Sustainability) | QoS sustainability analytics |
| Session Management Congestion Control Experience | Session management congestion control experience analytics |
| Redundant Transmission Experience | Analytics related to redundant transmission experience |
| WLAN performance | WLAN performance analytics |
| UE Dispersion | Dispersion analytics |
| Data network performance (DN Performance) | Data network performance analytics |

It should be noted that, in this embodiment of the present disclosure, a first communication device described below may be a PCF or a UDM, a second communication device may be an NWDAF, a third communication device may be an SMF, and a fourth communication device may be a UPF, which may also be other network functions with the same function or type, and is not limited in this embodiment of the present disclosure.

With reference to the accompanying drawings, the technical solutions provided in the embodiments of the present disclosure are described in detail by using some embodiments and application scenarios thereof.

An embodiment of the present disclosure provides a URSP rule optimization method. As shown in FIG. 2, the method is applied to a first communication device, and the URSP rule optimization method provided in this embodiment of the present disclosure includes the following step 201 and step 202.

Step 201: A first communication device re-evaluates a first URSP rule of a terminal based on target information, to obtain a second URSP rule.

Step 202: The first communication device sends a first message to the terminal.

The target information includes at least one of the following: a first analytics result, a first evaluation request, and an abnormality indication. The first analytics result is an analytics result and/or a prediction result requested by the first communication device, the first evaluation request is used for the terminal to request a re-evaluation on the first URSP rule, and the abnormality indication indicates that the first URSP rule is executed abnormally.

The first message includes the second URSP rule; and the second URSP rule is used for the terminal to select and/or establish a PDU session for traffic of an application.

In this embodiment of the present disclosure, in a process that the terminal selects and/or establishes the PDU session for the traffic of the application, the first communication device may re-evaluate the first URSP rule of the terminal based on at least one of the first analytics result, the first evaluation request, and the abnormality indication, to obtain the second URSP rule. Then the first communication device sends the second URSP rule to the terminal, so that the terminal selects and/or establishes the PDU session for the traffic of the application according to the second URSP rule. In this way, the terminal may more intelligently select and/or establish the PDU session for the traffic of the application according to an optimized URSP rule, thereby matching the traffic of the application to a PDU session with better performance.

Optionally, in the embodiments of the present disclosure, the target information may be information received by the first communication device from other devices. In addition, the target information may include one or more of the first analytics result, the first evaluation request, and the abnormality indication.

Optionally, in this embodiment of the present disclosure, the first analytics result may be information received by the first communication device from the second communication device; the first evaluation request may be information received by the first communication device from the terminal; and the abnormality indication may be information received by the first communication device from the third communication device.

Optionally, in this embodiment of the present disclosure, the first communication device may re-evaluate the first URSP rule based on the first analytics result, to obtain the second URSP rule; or the first communication device may re-evaluate the first URSP rule based on other information, to obtain the second URSP rule.

Optionally, in this embodiment of the present disclosure, the other information may be subscription information of the terminal, location information of the terminal, and the like. This may be specifically determined according to an actual use requirement, and is not limited in this embodiment of the present disclosure.

Optionally, in this embodiment of the present disclosure, the first URSP rule is an original URSP rule of the terminal, and the second URSP rule is a URSP rule obtained after optimizing the first URSP rule. Compared with the first URSP rule, the second URSP rule may be used to select and/or establish an appropriate PDU session more intelligently for the application.

Optionally, in this embodiment of the present disclosure, the second URSP rule may be: a URSP rule obtained after updating the first URSP rule, that is, a URSP rule obtained by adjusting the first URSP rule by the first communication device after receiving at least one of the first analytics result, the first evaluation request, and the abnormality indication. Alternatively, the second URSP rule may be: a new URSP rule. Which means, the first communication device sends the new URSP rule to the terminal to replace the first URSP rule.

Optionally, in this embodiment of the present disclosure, step 201 may be implemented by using the following step 201a and step 201b.

Step 201a: The first communication device re-evaluates the first URSP rule based on the target information.

In this embodiment of the present disclosure, the re-evaluating is used to determine whether the first URSP rule needs to be updated.

Step 201b: In a case that the first URSP rule needs to be updated, the first communication device performs a target operation on the first URSP rule, to obtain the second URSP rule.

The target operation includes at least one of the following:
adjusting precedence of a first route selection descriptor in a first traffic descriptor in the first URSP rule;
adjusting precedence of a first traffic descriptor in the first URSP rule;
adjusting a parameter in a first route selection descriptor in a first traffic descriptor in the first URSP rule;
adding a new route selection descriptor to a first traffic descriptor in the first URSP rule;
stopping using a first route selection descriptor in a first traffic descriptor in the first URSP rule;
stopping using a first traffic descriptor in the first URSP rule; and
generating a new URSP rule.

Optionally, in this embodiment of the present disclosure, the first traffic descriptor may be a traffic descriptor corresponding to a parameter with poor performance in the first URSP rule; and the first route selection descriptor may be a route selection descriptor corresponding to a parameter with poor performance in the first traffic descriptor.

Optionally, in this embodiment of the present disclosure, the adjusting a parameter in a first route selection descriptor in a first traffic descriptor in the first URSP rule includes at least one of the following:
adjusting an access mode in the first route selection descriptor, and changing the access mode into an access mode for which performance indicated by the first analytics result meets a first condition;
adjusting a DNN in the first route selection descriptor, and changing the DNN into a DNN for which performance indicated by the first analytics result meets a second condition; and
adjusting S-NSSAI in the first route selection descriptor, and changing the S-NSSAI into S-NSSAI for which performance indicated by the first analytics result meets a third condition.

Optionally, in this embodiment of the present disclosure, the first condition is that the performance of the access mode indicated by the first analytics result is better than that of the access mode in the first route selection descriptor; the second condition is that the performance of the DNN indicated by the first analytics result is better than that of the DNN in the first route selection descriptor; and the third condition is that the performance of the S-NSSAI indicated by the first analytics result is better than that of the S-NSSAI in the first route selection descriptor.

To be specific, the first communication device may request to analyze performance of the current S-NSSAI, DNN, and access mode, and adjust specific parameters in the RSD in the first URSP rule based on an analytics result, so that the traffic of the application on the terminal matches a PDU session with better performance.

For example, the target information is the first analytics result, and in the URSP rule optimization method provided in this embodiment of the present disclosure, the process in which the first communication device performs the target operation on the first URSP rule is described in detail.
1) The target operation includes adjusting precedence of a first route selection descriptor in a first traffic descriptor in the first URSP rule.

In the first traffic descriptor, an access mode corresponding to RSD 1 (for example, the first route selection descriptor) is 3GPP access (for example, fifth-generation system (5GS) access), and an access mode corresponding to RSD 2 is non-3GPP access (for example, WLAN access). In a case that performance of the non-3GPP access mode indicated by the first analytics result is better than that of the 3GPP access mode, the first communication device may increase precedence of RSD 2 and decrease precedence of RSD 1.

2) The target operation includes adjusting precedence of a first traffic descriptor in the first URSP rule.

In the first URSP rule, the first traffic descriptor includes 3GPP access, and the second traffic descriptor includes non-3GPP access. In a case that performance of the non-3GPP access mode indicated by the first analytics result is better than that of the 3GPP access mode, the first communication device may increase precedence of the second traffic descriptor and decrease precedence of the first traffic descriptor. The second traffic descriptor is a traffic descriptor other than the first traffic descriptor in the first URSP rule.

3) The target operation includes adjusting a parameter in a first route selection descriptor in a first traffic descriptor in the first URSP rule.

### a) Adjust an access mode in the first route selection descriptor

In the first traffic descriptor, RSD 1 (for example, the first route selection descriptor) corresponds to S-NSSAI-a, DNN = 1, and 3GPP access; and RSD 2 corresponds to S-NSSAI-a, DNN = 1, and WLAN access. In a case that performance of WLAN access indicated by the first analytics result is better than that of the 3GPP access mode, the first communication device may change 3GPP access in the first route selection descriptor to the WLAN access.

### b) Adjust a DNN in the first route selection descriptor

In the first traffic descriptor, RSD 1 (for example, the first route selection descriptor) corresponds to S-NSSAI-a, DNN = 1, and 3GPP access; and RSD 2 corresponds to S-NSSAI-a, DNN = 2, and WLAN access. In a case that performance of DNN = 2 indicated by the first analytics result is better than that of DNN = 1, the first communication device may change DNN = 1 in the first route selection descriptor to DNN = 2.

### c) Adjust S-NSSAI in the first route selection descriptor

In the first traffic descriptor, RSD 1 (for example, the first route selection descriptor) corresponds to S-NSSAI-b, DNN = 1, and 3GPP access; and RSD 2 corresponds to S-NSSAI-a, DNN = 1, and WLAN access. In a case that performance of S-NSSAI-a indicated by the first analytics result is better than that of S-NSSAI-b, the first communication device may change S-NSSAI-b in the first route selection descriptor to S-NSSAI-a.

### d) Add a new parameter to the first route selection descriptor

In a case of changing the access mode from WLAN access (without an SSC mode) to 3GPP access, the first communication device may add an SSC mode to the first route selection descriptor, that is, specify an SSC mode of a PDU session.

4) The target operation includes adding a new route selection descriptor to a first traffic descriptor in the first URSP rule.

For example, the first communication device may add an RSD related to WLAN access in the first route selection descriptor.

5) The target operation includes stopping using a first route selection descriptor in a first traffic descriptor in the first URSP rule.

In the first traffic descriptor, an access mode corresponding to RSD 1 (for example, the first route selection descriptor) is 3GPP access (for example, 5GS access), and an access mode corresponding to RSD 2 is non-3GPP access (for example, WLAN access). In a case that performance of the 3GPP access is poor, the first communication device may stop using RSD 1.

6) The target operation includes stopping using a first traffic descriptor in the first URSP rule.

In the first URSP rule, the first traffic descriptor includes 3GPP access, and the second traffic descriptor includes non-3GPP access. In a case that performance of the 3GPP access is poor, the first communication device may stop using the first traffic descriptor.

7) Generate a new URSP rule

In a case of better WLAN access performance, the first communication device may consider WLAN access more when designing a URSP rule.

Optionally, in this embodiment of the present disclosure, before step 201, the URSP rules provided in this embodiment of the present disclosure further include the following step 203 and step 204.

Step 203: The first communication device sends a second message to the second communication device.

In this embodiment of the present disclosure, the second message includes a first analytics identifier, and the second message is used to obtain an analytics result and/or a prediction result corresponding to the first analytics identifier.

Step 204: The first communication device receives a third message sent by the second communication device.

In this embodiment of the present disclosure, the third message includes a first analytics result corresponding to the first analytics identifier.

Optionally, in this embodiment of the present disclosure, the second message may be a subscription message or a request message, for example, Nnwdaf_AnalyticsSubscription_Subscribe or Nnwdaf_AnalyticsInfo_Request, and the third message may be a notification message or a response message, for example, Nnwdaf_AnalyticsSubscription_Notify or Nnwdaf_AnalyticsInfo_Response. When the second message is the subscription message, the second communication device notifies the first communication device as long as detecting that an access mode, a data network, or the like have changed. When the second message is the request message, the first communication device sends a request message, and the second communication device replies a response message.

Optionally, in this embodiment of the present disclosure, the second message may further include a first terminal identifier and/or first location information. In a case that the second message includes the first terminal identifier, the first analytics result is an analytics result corresponding to a terminal indicated by the first terminal identifier; and in a case that the second message includes the first location information, the first analytics result is an analytics result corresponding to a terminal corresponding to the first location information.

Optionally, in this embodiment of the present disclosure, the first location information may be an area of interest of the first communication device; and the terminal corresponding to the first location information may be all terminals in the area of interest of the first communication device.

It should be noted that, this embodiment of the present disclosure is described by taking one terminal as an example. For all terminals in the area of interest, the first communication device may re-evaluate a URSP rule of each terminal by using the URSP rule optimization method provided in this embodiment of the present disclosure. For example, the first communication device requests to analyze analytics results and/or prediction results that are of all terminals in the area of interest and that are corresponding to analytics identifiers.

Optionally, in this embodiment of the present disclosure, the first analytics identifier includes at least one of the following: load level information, service experience, network function load information, network performance, UE mobility, UE communication, an abnormal behaviour, user data congestion, quality of service sustainability, session management congestion control experience, redundant transmission experience, WLAN performance, UE dispersion, and DN performance.

Optionally, in this embodiment of the present disclosure, step 201 may be specifically implemented by using the following step 201c.

Step 201c: The first communication device re-evaluates, based on performance of a first analytics object indicated by the first analytics result, the first analytics object in the first URSP rule, to obtain the second URSP rule.

The first analytics object includes at least one of the following: an access mode, a DN, and a slice.

In this embodiment of the present disclosure, the access mode, the DN, and the slice in the first URSP rule may be re-evaluated based on the access mode performance, DN performance, and slice performance.

Optionally, in this embodiment of the present disclosure, in a case that the first analytics identifier is the load level information, the first analytics result indicates slice performance; the first analytics result includes at least one of the following: a quantity of registered terminals, a quantity of established PDU sessions, a quantity of used resources, a resource utilization threshold, a resource utilization threshold in time domain, and a load level; and/or
in a case that the first analytics identifier is the service experience, the first analytics result indicates first access mode performance; the first analytics result includes at least one of the following: a QoS flow bit rate, an uplink QoS flow packet delay or a downlink QoS flow packet delay, a quantity of transmitted packets, a quantity of retransmitted packets, a radio access technology (RAT) type, a frequency of serving cell, and access signal quality; and/or
in a case that the first analytics identifier is the WLAN performance, the first analytics result indicates second access mode performance; the first analytics result includes at least one of the following: a received signal strength indicator (RSSI), an uplink data rate or a downlink data rate, and uplink data traffic or downlink data traffic; and/or
in a case that the first analytics identifier is the DN performance, the first analytics result indicates the DN performance; the first analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

It may be understood that each analytics identifier corresponds to an analytics result indicating performance of one analytics object. To be specific, the first communication device may obtain an analytics result indicating the slice performance by sending the load level information; the first communication device may obtain an analytics result indicating the first access mode performance by sending the service experience; the first communication device may obtain an analytics result indicating the second access mode performance by sending the WLAN performance; and the first communication device may obtain an analytics result indicating the DN performance by sending the DN performance.

Optionally, in this embodiment of the present disclosure, in a case that the first analytics identifier is the service experience, the first analytics result indicates at least one of the following: slice performance, access mode performance, and DN performance.

In a case that the first analytics result indicates the slice performance, the first analytics result includes at least one of the following: a quantity of registered terminals, a quantity of established PDU sessions, a quantity of used resources, a resource utilization threshold, a resource utilization threshold in time domain, and a load level; and/or
in a case that the first analytics result indicates the access mode performance, the first analytics result includes first access mode performance and/or second access mode performance; the first access mode performance includes at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; the second access mode performance includes at least one of the following: an RSSI, an uplink data rate or a downlink data rate, and uplink data traffic or downlink data traffic; and/or
in a case that the first analytics result indicates the DN performance, the first analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

It may be understood that one analytics identifier corresponds to an analytics result indicating performance of a plurality of analytics objects. To be specific, the first communication device may obtain an analytics result indicating the slice performance, the first access mode performance, the second access mode performance, and the DN performance by sending the service experience.

It should be noted that, in this embodiment of the present disclosure, the analytics result indicating the performance of the plurality of analytics objects may be obtained by using one analytics identifier, so that efficiency of the first communication device in obtaining the analytics result is improved.

Optionally, in this embodiment of the present disclosure, the first access mode may be a 3GPP access mode (for example, 5GS access), and the second access mode may be a non-3GPP access mode (for example, WLAN access).

The following is an example of descriptions of related parameters of different analytics identifiers.

For example, related parameters of QoS are shown in Table 2.

**Table 2 Parameters and descriptions of QoS**

| Parameters | Descriptions |
|---|---|
| QoS flow bit rate | Bit rate observed in an uplink (UL) direction and bit rate observed in a downlink (DL) direction |
| QoS flow packet delay | Packet delay observed in a UL direction and packet delay observed in a DL direction |
| Transmitted packet | Quantity of transmitted packets that are observed |
| Retransmitted packet | Quantity of retransmitted packets that are observed |

For example, related parameters of 5GS access are shown in Table 3.

**Table 3 Parameters and descriptions of 5GS access**

| Parameters | Descriptions |
|---|---|
| Timestamp | Timestamp related to collected information |
| Reference signal received power (RSRP) | Received power level measured by each UE in a network cell, including a synchronization signal reference signal received power (synchronization signal RSRP, SS-RSRP), a channel state information reference signal received power (channel state information RSRP, CSI-RSRP), and an evolved universal-mobile-telecommunication-system terrestrial radio access reference signal received power (evolved universal-mobile-telecommunication-system terrestrial radio access RSRP, E-UTRA RSRP) |
| Reference signal received quality (reference signal received quality, RSRQ) | Received signal quality measured by each UE in a network cell, including synchronization signal reference signal received quality (synchronization signal RSRQ, SS-RSRQ), channel state information reference signal received quality (channel state information RSRQ, CSI-RSRQ), and evolved universal-mobile-telecommunication-system terrestrial radio access reference signal received quality (evolved universal-mobile-telecommunication-system terrestrial radio access RSRQ, E-UTRA RSRQ) |
| Signal to interference plus noise ratio (SINR) | Signal to interference plus noise ratio measured by each UE in a network cell, including a synchronization signal to interference plus noise ratio (synchronization signal SINR, SS-SINR), a channel state information signal to interference plus noise ratio (channel state information SINR, CSI-SINR), and an evolved universal-mobile-telecommunication-system terrestrial radio access reference signal signal to interference plus noise ratio (evolved universal-mobile-telecommunication-system terrestrial radio access reference signal SINR, E-UTRA RS-SINR) |
| (mapping information between cell ID and frequency | Mapping information between cell ID and frequency |
| Cell energy saving state | List of cells in an area of interest and in an energy saving state |
| Radio access technology type (RAT type) | Indicate an RAT type of an application for application service experience analytics |
| Radio access frequency | Indicate a carrier frequency of a UE serving cell of an application for application service experience analytics |

For example, related parameters of WLAN access are shown in Table 4.

**Table 4 Parameters and descriptions of WLAN access**

| Parameters | Descriptions |
|---|---|
| RSSI | Measured RSSI |
| Round-Trip Time (RTT) | Measured RTT |
| Traffic information | Uplink and downlink rate, and traffic carried or passed by a PDU session of WLAN access |
| Service set identifier (SSID), basic service set identifier (BSSID), and homogenous extended service set identifier (HESSID) for identifying a WLAN access network | SSID, BSSID, or HESSID of a WLAN selected during analytics |

For example, related parameters of slice performance are shown in Table 5.

**Table 5 Parameters and descriptions of slice performance**

| Parameters | Descriptions |
|---|---|
| Quantity of registered terminals | Quantity of terminals registered to the network slice |
| Quantity of established PDU sessions | Quantity of established PDU sessions of a network slice instance (average, variance) |
| Resource usage | Resource utilization rate of slices, mainly referring to utilization of virtual resources, such as a CPU, a memory, a disk, and the like |
| Resource usage threshold | If a user provides a threshold as an analytics filter, times of the resource utilization threshold are met, exceeded, or crossed on a network slice instance |
| Resource utilization threshold in time domain | A cross vector of the resource utilization threshold includes a time interval that meets, exceeds, or crosses each threshold on the network slice instance, provided that the user provides a threshold as the analytics filter |
| Load level | Load level of slice |
| Load level threshold | The Load Level Threshold that are met or exceeded by the statistics value or the expected value of the Load Level Threshold if threshold is provided by the consumer as Analytics Filter |

For example, with reference to Table 2, Table 3, and Table 5, the first communication device subscribes to analytics corresponding to analytics ID = UE communication or Service Experience, to obtain performance of 3GPP access, and performance parameters of 3GPP access include: an uplink or downlink QoS flow bit rate, an uplink or downlink QoS flow packet delay, a quantity of transmitted packets (packet transmission), a quantity of retransmitted packets (packet retransmission), a reference signal received power (RSRP), reference signal received quality (RSRQ), a signal to interference plus noise ratio (SINR), and the like. The first communication device subscribes to analytics corresponding to analytics ID = WLAN Performance, to obtain performance of WLAN access, and performance parameters of WLAN access include: a received signal strength indicator (RSSI), a round-trip time (RTT), and traffic information; and the traffic information includes: at least one of the following covered by a WLAN access point or a WLAN network: an uplink data rate or a downlink data rate, uplink data traffic or downlink data traffic, and the like.

The first communication device may compare performance in 3GPP access and non-3GPP access (such as WLAN access) based on an obtained analytics result, and select the one with better access performance for terminal access.

For example, related parameters of DN performance are shown in Table 6.

**Table 6 Parameters and descriptions of DN performance**

| Parameters | | Descriptions |
|---|---|---|
| DNN | | Identify a name of a data network (for example, "Internet") for which analytics information is provided |
| DN performance | | List of DN performances for the application |
| Application Server Instance Address | | Identify an application server instance (IP address/FQDN of an application server) |
| Service anchor UPF | | Involved anchor UPF |
| Data network access identifier (DN Access Identifier, DNAI) | | Identifier of a user plane access to one or more DN(s) |
| Performance | | Performance indicators |
| | Average traffic rate | Observed average traffic rate of UE communicating with an application |
| | Maximum traffic rate | Observed maximum traffic rate of UE communicating with an application |
| | Average packet delay | Observed average packet delay of UE communicating with an application |
| | Maximum packet delay | Observed maximum packet delay of UE communicating with an application |
| | Average packet loss rate | Observed average packet loss rate of UE communicating with an application |

For example, with reference to Table 6, the first communication device may subscribe to analytics corresponding to analytics ID = DN performance. Because within DN performance, data of an application server (such as an IP address of the application server) may be provided, including: an average packet delay, an average packet loss rate, a throughput, and the like, an analytics result and/or a prediction result corresponding to DN performance includes: at least one of the following in analyzed and/or predicted DNN or S-NSSAI: an accessed application server instance address, and a performance index for accessing an application server address, where the performance index includes at least one of the following: an average traffic rate, a maximum traffic rate, an average packet delay, a maximum packet delay, and an average packet loss rate. Therefore, the first communication device may compare performance of a plurality of DNs, such as an average rate, a packet delay, and the like, to determine which DN has better performance, so that the terminal may access a DN with better performance.

For example, related parameters of service experience are shown in Table 7.

**Table 7 Parameters and descriptions of service experience**

| Parameters | Descriptions |
|---|---|
| Slice instance service experiences | List of service experience information observed by each network slice instance |
| S-NSSAI | Identify a network slice |
| Network slice instance identifier (NSI ID) | Identify a network slice instance in a network slice |
| Network Slice instance service experience | Service experience across Applications on a Network Slice instance over the Analytics target period (average, variance) |
| List of subscription permanent identifiers (Subscription Permanent Identifier, SUPI) | SUPI list of applications of slice instance service experience |
| Ratio | Estimated percentage of UEs with similar service experience (in one group or in all UEs) |
| Application service experience | List of service experience information observed by each application |
| S-NSSAI | Identify a network slice for accessing an application |
| Application identifier | Identify an application |
| Service experience type | Type of service experience analytics, such as voice, video, and the like |
| UE Location | Indicate location information of UE (such as a tracking area identity (TAI) list, a gNB identifier, and the like) when providing a UE service |
| UPF information | Indicate a UPF of a serving UE |
| DNAI | Indicate a DNAI used/hosted by a UE service |
| DNN | DNN of a PDU session including a QoS flow |
| Instance address of an application server | Identify an FQDN of an application server instance (IP address of an application server) or an application server |
| Service experience | Service experience during target analytics (average, variance) |
| SUPI list | List of SUPIs with same application service experience |
| Ratio | Estimated percentage of UEs with similar service experience (in one group or in all UEs) |
| Spatial validity | Area of an application for application service experience analytics |
| Validity period | Validity period of application service experience analytics |
| RAT type | Indicate an RAT type of an application for application service experience analytics |
| Frequency | Indicate a carrier frequency of a UE serving cell of an application for application service experience analytics |
| Note 1: Whether an analytics subset is included or not is determined by analytics filter information. | |

For example, related parameters of UE communication are shown in Table 8.

**Table 8 Parameters and descriptions of UE communication**

| Parameters | Descriptions |
|---|---|
| UE group identifier or UE identifier | Identify one UE or a group of UEs |
| UE communication | Communication time slot list |
| Periodic communication indicator | Identify whether UE communicates periodically |
| Periodic time | Interval of periodic communication (average and variance) if UE communicates periodically Example: per hour |
| Start time | Observed start time (average and variance) |
| Duration | Duration of communication (average and variance) |
| Traffic characteristics | S-NSSAI, DNN, port, and other useful information |
| Traffic | Traffic or downstream traffic (average and variance) |
| Ratio | Percentage of UE in a group (in case of UE group) |
| Application | List of applications used |
| Application identifier | Identifier of an application |
| Start time | Start time of an application |
| Duration | Duration interval of an application |
| Occurrence ratio | Proportion of applications used by UE during requested period |
| Spatial validity | Area of an application with a service behaviour If information of an area of interest is provided in request or subscription, spatial validity may be a subset of a requested area of interest |
| N4 session identifier | Identifier of an N4 session |
| Inactivity detection time | Value of a session inactivity timer (average and variance) |

For example, with reference to Table 5, Table 6, Table 7, and Table 8, the first communication device may subscribe to analytics corresponding to analytics ID = DN Performance, UE communication, Service Experience, or load level information, and obtain performance of a plurality of slices, such as current resource utilization of the slice, a quantity of established PDU sessions, a quantity of registered terminals, slice load level, and the like. Alternatively, performance indexes in each slice may be compared, and the performance index includes at least one of the following: an average traffic rate, a maximum traffic rate, an average packet delay, a maximum packet delay, and an average packet loss rate. Therefore, the first communication device may compare performance of a plurality of slices, to determine which slice has better performance, so that the terminal may access a slice with better performance.

For example, related parameters of session management congestion control experience are shown in Table 9.

**Table 9 Parameters and descriptions of session management congestion control experience**

| Parameters | Descriptions |
|---|---|
| DNN | DNN that SMCC is applied |
| S-NSSAI | S-NSSAI that SMCC is applied |
| List of UEs classified by session management congestion control (SMCC) experience level | One or more of the following lists (SUPI is used to identify UE) |
| UE list with high experience | UE list with a high experience level of SMCC of a specific DNN and/or S-NSSAI |
| UE list with medium experience | UE list with a medium experience level of SMCC of a specific DNN and/or S-NSSAI |
| UE list with low experience | UE list with a low experience level of SMCC of a specific DNN and/or S-NSSAI |

For example, related parameters of UE mobility are shown in Table 10.

**Table 10 Parameters and descriptions of UE mobility**

| Parameters | Descriptions |
|---|---|
| UE identifier | It may be an external UE identifier (namely, Generic Public Subscription Identifier, GPSI) |
| Application identifier | Identify an application that provides this information |
| UE trajectory | UE location with timestamp |
| UE Location | Geographic area entered by UE |
| Timestamp | Timestamp of UE entering the area |
| Notes: The application identifier is optional. If the application identifier is omitted, collected UE mobility information may be applied to all applications of the UE. | |

Optionally, in this embodiment of the present disclosure, step 201 may be specifically implemented by using the following step 201d.

Step 201d: In a case that at least one of the first evaluation request and the abnormality indication is received, the first communication device re-evaluates the first URSP rule, to obtain the second URSP rule.

Optionally, in this embodiment of the present disclosure, in a case that at least one of the first evaluation request and the abnormality indication is received, the first communication device may re-evaluate the first URSP rule based on subscription information of the terminal, location information of the terminal, and the like, to obtain the second URSP rule.

Optionally, in this embodiment of the present disclosure, in a case that at least one of the first evaluation request and the abnormality indication is received, if the first communication device further receives the first analytics result, the first communication device may re-evaluate the first URSP rule based on the first analytics result, to obtain the second URSP rule.

Optionally, in this embodiment of the present disclosure, the first evaluation request may be a non-access stratum (NAS) message.

Optionally, in this embodiment of the present disclosure, before step 201, the URSP rules provided in this embodiment of the present disclosure further include the following step 205 and step 206.

Step 205: The first communication device sends a fourth message to a third communication device.

In this embodiment of the present disclosure, the fourth message includes the first URSP rule, and the fourth message is used to evaluate execution of the first URSP rule.

Step 206: The first communication device receives the abnormality indication sent by the third communication device.

In this embodiment of the present disclosure, when the first communication device monitors the first URSP rule of the terminal, if it is required to determine whether traffic of the application correctly matches a corresponding PDU session, the first communication device may send a fourth message to the third communication device, so that the third communication device evaluates the execution of the first URSP rule of the terminal. In a case of determining that the first URSP rule is executed abnormally, the third communication device sends an abnormality indication to the first communication device, so that the first communication device may re-evaluate the first URSP rule.

Optionally, in this embodiment of the present disclosure, the fourth message further includes: a first IP descriptor, and the first IP descriptor is used to evaluate the execution of the first URSP rule. Before step 205, the URSP rules provided in this embodiment of the present disclosure further include the following step 207.

Step 207: The first communication device maps a first traffic descriptor in the first URSP rule to the first IP descriptor.

The first traffic descriptor includes at least one of the following: an application descriptor, a domain descriptor, a data network name, and a connection capability. The first IP descriptor is a destination IP 3 tuple.

In this embodiment of the present disclosure, only an IP descriptor (that is, a destination IP address 3 tuple) may be used for a UPF or an SMF to generate a PDR, while other descriptors should be mapped into IP descriptors before a PDR is generated.

Optionally, in this embodiment of the present disclosure, the first IP descriptor is used to generate a packet detection rule (PDR) in a UPF, and the PDR may be used to evaluate the execution of the first URSP rule, for example, to detect whether traffic of the application has appeared in a PDU session.

In this embodiment of the present disclosure, a new mapping mode is introduced, that is, a non-IP descriptor in the first URSP rule is mapped into an IP descriptor, so that the third communication device evaluates the execution of the first URSP rule based on the IP descriptor. In this way, in a case that an abnormality indication is received, the first communication device re-evaluates the first URSP rule, and obtains the second URSP rule. This improves efficiency of the first communication device in optimizing the first URSP rule of the terminal.

An embodiment of the present disclosure provides a URSP rule optimization method. As shown in FIG. 3, the method is applied to a terminal, and the URSP rule optimization method provided in this embodiment of the present disclosure includes the following step 301 and step 302.

Step 301: A terminal receives a first message from a first communication device.

In this embodiment of the present disclosure, the first message includes a second URSP rule.

Step 302: The terminal selects and/or establishes a PDU session for traffic of an application according to the second URSP rule.

The second URSP rule is: a URSP rule obtained after a first URSP rule of the terminal is re-evaluated.

In this embodiment of the present disclosure, the terminal may more intelligently select and/or establish a PDU session for traffic of an application according to a re-evaluated URSP rule (that is, an optimized URSP rule).

Optionally, in this embodiment of the present disclosure, before step 301, the URSP rule optimization method provided in this embodiment of the present disclosure further include the following step 303.

Step 303: The terminal sends a first evaluation request to the first communication device.

The first evaluation request is used to request the first communication device to re-evaluate the first URSP rule.

Optionally, in this embodiment of the present disclosure, the first evaluation request may be sent by using an NAS message.

Optionally, in this embodiment of the present disclosure, the NAS message includes at least one of the following:
registration request;
registration complete;
PDU session establishment request;
PDU session modification request;
PDU session establishment accept; and
PDU session modification command accept.

The first evaluation request may include a URSP rule that the terminal expects to re-evaluate. Specifically, the first evaluation request includes at least one of the following:
one or more traffic descriptors to be re-evaluated;
one or more RSDs in a traffic descriptor to be re-evaluated; and
all URSP rules of the terminal.

Optionally, in this embodiment of the present disclosure, before step 303, the URSP rule optimization method provided in this embodiment of the present disclosure further include the following step 304. In addition, the foregoing step 303 may be specifically implemented by the following step 303a.

Step 304: The terminal re-evaluates the first URSP rule based on a second analytics result.

In this embodiment of the present disclosure, the re-evaluating is used to determine whether the first URSP rule needs to be updated.

Step 303a: The terminal sends the first evaluation request to the first communication device in a case that the first URSP rule needs to be updated.

The second analytics result is an analytics result and/or a prediction result requested by the terminal.

Optionally, in this embodiment of the present disclosure, the second analytics result may be an analytics result received by the terminal from the second communication device.

Optionally, in this embodiment of the present disclosure, the foregoing step 304 can be specifically implemented by performing the following step 304a.

Step 304a: The terminal re-evaluates, based on performance of a second analytics object indicated by the second analytics result, the second analytics object in the first URSP rule.

The second analytics object includes at least one of the following: an access mode, a DN, and a slice.

Optionally, in this embodiment of the present disclosure, before step 303, the URSP rule optimization method provided in this embodiment of the present disclosure further include the following step 305 and step 306.

Step 305: The terminal sends a sixth message to the second communication device.

In this embodiment of the present disclosure, the sixth message includes a second analytics identifier, and the sixth message is used to obtain an analytics result and/or a prediction result corresponding to the second analytics identifier.

Step 306: The terminal receives a seventh message sent by the second communication device.

In this embodiment of the present disclosure, the seventh message includes a second analytics result corresponding to the second analytics identifier.

Optionally, in this embodiment of the present disclosure, the sixth message may be a subscription message or a request message, and the seventh message may be a notification message or a response message. When the sixth message is the subscription message, the second communication device notifies the terminal as long as detecting that an access mode, a data network, and the like have changed; and when the sixth message is the request message, the terminal sends a request message, and the second communication device replies a response message.

Optionally, in this embodiment of the present disclosure, the second analytics identifier includes at least one of the following: load level information, service experience, network function load information, network performance, UE mobility, UE communication, an abnormal behaviour, user data congestion, quality of service sustainability, session management congestion control experience, redundant transmission experience, WLAN performance, UE dispersion, and DN performance.

Optionally, in this embodiment of the present disclosure, in a case that the second analytics identifier is the load level information, the second analytics result indicates slice performance; the second analytics result includes at least one of the following: a quantity of registered terminals, a quantity of established PDU sessions, a quantity of used resources, a resource utilization threshold, a resource utilization threshold in time domain, and a load level; and/or
in a case that the second analytics identifier is the service experience, the second analytics result indicates first access mode performance; the second analytics result includes at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; and/or
in a case that the second analytics identifier is the WLAN performance, the second analytics result indicates second access mode performance; the second analytics result includes at least one of the following: an RSSI, an uplink data rate or a downlink data rate, and uplink data traffic or downlink data traffic; and/or
in a case that the second analytics identifier is the DN performance, the second analytics result indicates the DN performance; the second analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

It may be understood that each analytics identifier corresponds to an analytics result indicating performance of one analytics object. To be specific, the terminal may obtain an analytics result indicating the slice performance by sending the load level information; the terminal may obtain an analytics result indicating the first access mode performance by sending the service experience; the terminal may obtain an analytics result indicating the second access mode performance by sending the WLAN performance; and the terminal may obtain an analytics result indicating the DN performance by sending the DN performance.

Optionally, in this embodiment of the present disclosure, in a case that the second analytics identifier is the service experience, the second analytics result indicates at least one of the following: slice performance, access mode performance, and DN performance.

In a case that the second analytics result indicates the slice performance, the second analytics result includes at least one of the following: a quantity of registered terminals, a quantity of established PDU sessions, a quantity of used resources, a resource utilization threshold, a resource utilization threshold in time domain, and a load level; and/or
in a case that the second analytics result indicates the access mode performance, the second analytics result includes first access mode performance and/or second access mode performance; the first access mode performance includes at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; the second access mode performance includes at least one of the following: an RSSI, an uplink data rate or a downlink data rate, and uplink data traffic or downlink data traffic; and/or
in a case that the second analytics result indicates the DN performance, the second analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

It may be understood that one analytics identifier corresponds to an analytics result indicating performance of a plurality of analytics objects. To be specific, the terminal may obtain an analytics result indicating the slice performance, the first access mode performance, the second access mode performance, and the DN performance by sending the service experience.

It should be noted that, in this embodiment of the present disclosure, the analytics result indicating the performance of the plurality of analytics objects may be obtained by using one analytics identifier, so that efficiency of the terminal in obtaining the analytics result is improved.

Optionally, in this embodiment of the present disclosure, the first access mode may be a 3GPP access mode (for example, 5GS access), and the second access mode may be a non-3GPP access mode (for example, WLAN access).

To be specific, the terminal may obtain performance of an access mode, slice performance, DN performance, or the like. By comparing performance of different access modes, slices, or DNs, if a parameter of RSD in the first URSP rule is set improperly, for example, performance of access mode 1 is good, but precedence of access mode 1 is low, then the terminal may request the first communication device to re-evaluate the first URSP rule.

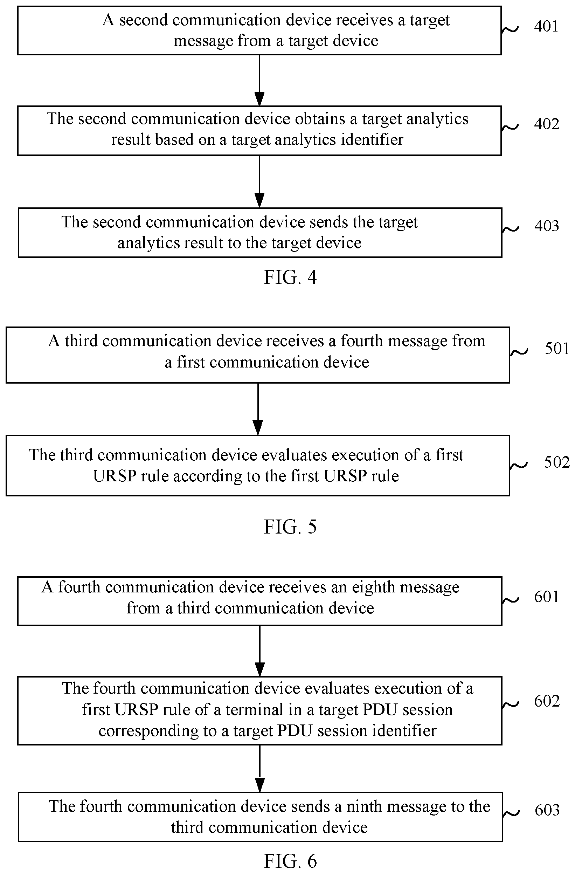

Embodiments of the present disclosure provide a URSP rule optimization method. As shown in FIG. 4, the method is applied to a second communication device, and the URSP rule optimization method provided in this embodiment of the present disclosure includes the following step 401 to step 403.

Step 401: A second communication device receives a target message from a target device.

In this embodiment of the present disclosure, the target message includes a target analytics identifier, and the target message is used for the target device to obtain an analytics result and/or a prediction result corresponding to the target analytics identifier.

Step 402: The second communication device obtains a target analytics result based on the target analytics identifier.

The target analytics result is used for the target device to re-evaluate a first URSP rule of a terminal.

Step 403: The second communication device sends the target analytics result to the target device.

In this embodiment of the present disclosure, the second communication device may receive the target message from the target device, obtain the target analytics result based on the target analytics identifier in the target message, and then send the target analytics result to the target device, so that the target device re-evaluates the first URSP rule of the terminal based on the target analytics result. Finally, the terminal may more intelligently select and/or establish a PDU session for traffic of the application according to a re-evaluated URSP rule (that is, an optimized URSP rule).

Optionally, in this embodiment of the present disclosure, the target message may be a subscription message or a request message. When the target message is the subscription message, the second communication device notifies the target device as long as detecting that an access mode, a data network, and the like have changed. When the target message is the request message, the target device sends a request message, and the second communication device replies a response message.

Optionally, in this embodiment of the present disclosure, the target message may further include a first terminal identifier and/or first location information. In a case that the target message includes the first terminal identifier, the target analytics result is an analytics result corresponding to a terminal indicated by the first terminal identifier; and in a case that the target message includes the first location information, the target analytics result is an analytics result corresponding to a terminal corresponding to the first location information.

Optionally, in this embodiment of the present disclosure, the first location information may be an area of interest of the target device; and the terminal corresponding to the first location information may be all terminals in the area of interest of the target device.

Optionally, in this embodiment of the present disclosure, the target device is the first communication device.

The target message is a second message; and the target analytics identifier is a first analytics identifier.

Optionally, in this embodiment of the present disclosure, the target device is the terminal.

The target message is a sixth message; and the target analytics identifier is a second analytics identifier.

Optionally, in this embodiment of the present disclosure, the foregoing step 402 can be specifically implemented by performing the following step 402a.

Step 402a: The second communication device obtains the target analytics result by analyzing a target analytics object based on the target analytics identifier.

The target analytics identifier indicates the target analytics object, and the target analytics object includes at least one of the following: an access mode, a DN, and a slice.

Optionally, in this embodiment of the present disclosure, in a case that the target analytics identifier is the load level information, the target analytics result indicates slice performance; the target analytics result includes at least one of the following: a quantity of registered terminals, a quantity of established PDU sessions, a quantity of used resources, a resource utilization threshold, a resource utilization threshold in time domain, and a load level; and/or
in a case that the target analytics identifier is service experience, the target analytics result indicates first access mode performance; the target analytics result includes at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; and/or
in a case that the target analytics identifier is WLAN performance, the target analytics result indicates second access mode performance, and the target analytics result includes at least one of the following: an RSSI, an uplink data rate or a downlink data rate, and uplink data traffic or downlink data traffic; and/or
in a case that the target analytics identifier is DN performance, the target analytics result indicates DN performance, and the target analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

It may be understood that each analytics identifier corresponds to an analytics result indicating performance of one analytics object. To be specific, the target device may obtain an analytics result indicating the slice performance by sending the load level information; the target device may obtain an analytics result indicating the first access mode performance by sending the service experience; the target device may obtain an analytics result indicating the second access mode performance by sending the WLAN performance; and the target device may obtain an analytics result indicating the DN performance by sending the DN performance.

Optionally, in this embodiment of the present disclosure, in a case that the target analytics identifier is the service experience, the target analytics result indicates at least one of the following: slice performance, access mode performance, and DN performance.

In a case that the target analytics result indicates the slice performance, the target analytics result includes at least one of the following: a quantity of registered terminals, a quantity of established PDU sessions, a quantity of used resources, a resource utilization threshold, a resource utilization threshold in time domain, and a load level; and/or
in a case that the target analytics result indicates the access mode performance, the target analytics result includes first access mode performance and/or second access mode performance; the first access mode performance includes at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; the second access mode performance includes at least one of the following: an RSSI, an uplink data rate or a downlink data rate, and uplink data traffic or downlink data traffic; and/or
in a case that the target analytics result indicates the DN performance, the target analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

It may be understood that one analytics identifier corresponds to an analytics result indicating performance of a plurality of analytics objects. To be specific, the target device may obtain an analytics result indicating the slice performance, the first access mode performance, the second access mode performance, and the DN performance by sending the service experience. In other words, the second communication device may provide an analytics result indicating performance of a plurality of analytics objects based on only one analytics identifier.

Optionally, in this embodiment of the present disclosure, the first access mode may be a 3GPP access mode (for example, 5GS access), and the second access mode may be a non-3GPP access mode (for example, WLAN access).

Optionally, in this embodiment of the present disclosure, the target analytics identifier includes at least one of the following: load level information, service experience, network function load information, network performance, UE mobility, UE communication, an abnormal behaviour, user data congestion, quality of service sustainability, session management congestion control experience, redundant transmission experience, WLAN performance, UE dispersion, and DN performance.

To be specific, the second communication device may provide an analytics result and/or a prediction result on the performance of the access mode, the DN, the slice, and the like. The analytics result and/or the prediction result may provide a basis for the first communication device to re-evaluate the first URSP rule.

Embodiments of the present disclosure provide a URSP rule optimization method. As shown in FIG. 5, the method is applied to a third communication device, and the URSP rule optimization method provided in this embodiment of the present disclosure includes the following step 501 and step 502.

Step 501: A third communication device receives a fourth message from a first communication device.

In this embodiment of the present disclosure, the fourth message includes a first URSP rule of a terminal.

Step 502: The third communication device evaluates execution of the first URSP rule according to the first URSP rule.

Optionally, in this embodiment of the present disclosure, after step 502, the URSP rule optimization method provided in this embodiment of the present disclosure further include the following step 503.

Step 503: The third communication device sends an abnormality indication to the first communication device.

The abnormality indication indicates that the first URSP rule is executed abnormally.

In this embodiment of the present disclosure, when the first communication device monitors the first URSP rule of the terminal, if it is required to determine whether traffic of the application correctly matches a corresponding PDU session, the first communication device may send a fourth message to the third communication device, so that the third communication device evaluates the execution of the first URSP rule of the terminal. In a case of determining that the first URSP rule is executed abnormally, the third communication device sends an abnormality indication to the first communication device, so that the first communication device may re-evaluate the first URSP rule.

Optionally, in this embodiment of the present disclosure, step 502 may be specifically implemented by using the following step 502a and step 502b.

Step 502a: The third communication device sends an eighth message to a fourth communication device.

In this embodiment of the present disclosure, the eighth message includes a target PDU session identifier. The eighth message is used for the fourth communication device to evaluate execution of a first URSP rule in a target PDU session corresponding to the target PDU session identifier.

The target PDU session is a PDU session in which traffic of a target application should not exist, and the traffic of the target application is traffic for a PDU session matched by the terminal according to the first URSP rule.

Optionally, in this embodiment of the present disclosure, the third communication device may determine, according to the first URSP rule, which PDU sessions of the current terminal should not have the traffic of the target application, that is, determine the target PDU session, to send the eighth message including the target PDU session identifier to the fourth communication device.

Step 502b: The third communication device receives a ninth message sent by the fourth communication device.

In this embodiment of the present disclosure, the ninth message indicates that the first URSP rule is executed abnormally.

In this embodiment of the present disclosure, the third communication device may send the eighth message to the fourth communication device, so that the fourth communication device evaluates the execution of the first URSP rule. In a case of determining that the first URSP rule is executed abnormally, the fourth communication device sends the ninth message to the third communication device, to indicate that the first URSP rule is executed abnormally, and then the third communication device sends an abnormality indication to the first communication device, so that the first communication device may re-evaluate the first URSP rule.

It should be noted that, in the related technology, the traffic of the target application is usually detected in each PDU session, and if the traffic of the target application is detected in a PDU session, it indicates that a URSP rule corresponding to an attribute or a parameter of the PDU session is a URSP rule used by the terminal. Compared with detecting the traffic of the target application in each PDU session, in this embodiment of the present disclosure, only the PDU session in which the traffic of the target application should not exist is detected, and once the traffic of the target application is detected, it indicates that the terminal misuses or improperly uses the URSP rule. This may avoid the problem that a detection process is complicated because all PDU sessions need to be detected in the related technology, thereby improving efficiency of detecting the URSP rule of the terminal.

For example, for specific application traffic, according to the first URSP rule, the application traffic may definitely not be matched with PDU session 1 (an RSD in Traffic Descriptor of the application traffic does not include a session parameter corresponding to PDU session 1, that is, a PDU session parameter described by the RSD is inconsistent with a session parameter corresponding to PDU session 1). Then, a network side device may configure a packet detection rule (PDR) in a UPF of PDU session 1 that carries UE, to detect the application traffic. If the application traffic is detected in this PDU session 1, it indicates that the application traffic is matched with a PDU session that should not be matched, and it is determined that the terminal misuses the first URSP rule, or the first URSP rule is used improperly.

Optionally, in this embodiment of the present disclosure, the eighth message further includes: a PDR, where the PDR is used for the fourth communication device to evaluate the execution of the first URSP rule.

Optionally, in this embodiment of the present disclosure, the PDR may be generated by the third communication device based on an IP descriptor. The IP descriptor may be obtained by the third communication device mapping a traffic descriptor in the first URSP rule, or may be received by the third communication device from the first communication device.

Optionally, in this embodiment of the present disclosure, in an implementation, before step 502a, the URSP rule optimization method provided in this embodiment of the present disclosure further include the following step 504.

Step 504: The third communication device maps a second traffic descriptor in the first URSP rule to the second IP descriptor.

The PDR is a PDR generated based on the second IP descriptor.

The second traffic descriptor includes at least one of the following: an application descriptor, a domain descriptor, a data network name, and a connection capability; and the second IP descriptor is a destination IP 3 tuple.

Optionally, in this embodiment of the present disclosure, in another implementation, the fourth message further includes: a first IP descriptor. The PDR is a PDR generated based on the first IP descriptor.

In this embodiment of the present disclosure, a new mapping mode is introduced, that is, a non-IP descriptor in the first URSP rule is mapped into an IP descriptor, so that the third communication device may evaluate the execution of the first URSP rule based on the IP descriptor, thereby improving efficiency of detecting the URSP rule of the terminal.

In this embodiment of the present disclosure, only the IP descriptor (including the destination IP 3 tuple) may be directly used to generate a PDR. Other descriptors, such as an application descriptor, a domain descriptor, a data network name, a connection capability, and the like need to be transformed into corresponding IP descriptors through this mapping before being used to generate a PDR.

An embodiment of the present disclosure provides a URSP rule optimization method. As shown in FIG. 6, the method is applied to a fourth communication device, and the URSP rule optimization method provided in this embodiment of the present disclosure includes the following step 601 to step 603.

Step 601: A fourth communication device receives an eighth message from a third communication device.

In this embodiment of the present disclosure, the eighth message includes a target PDU session identifier. The target PDU session is a PDU session in which traffic of a target application should not exist; and the traffic of the target application is traffic for a PDU session matched by the terminal according to the first URSP rule.

Step 602: The fourth communication device evaluates execution of a first URSP rule of a terminal in a target PDU session corresponding to the target PDU session identifier.

Step 603: The fourth communication device sends a ninth message to the third communication device.

In this embodiment of the present disclosure, the ninth message indicates that the first URSP rule is executed abnormally.

Optionally, in this embodiment of the present disclosure, the ninth message indicates: the traffic of the target application is detected in the target PDU session.

In this embodiment of the present disclosure, the fourth communication device may receive the eighth message from the third communication device, evaluate the execution of the first URSP rule in the target PDU session corresponding to the target PDU session identifier, and in a case that the traffic of the target application is detected in the target PDU session, send the ninth message to the third communication device, to indicate that the first URSP rule is executed abnormally.

It should be noted that, in the related technology, the traffic of the target application is usually detected in each PDU session, and if the traffic of the target application is detected in a PDU session, it indicates that a URSP rule corresponding to an attribute or a parameter of the PDU session is a URSP rule used by the terminal. Compared with detecting the traffic of the target application in each PDU session, in this embodiment of the present disclosure, only the PDU session in which the traffic of the target application should not exist is detected, and once the traffic of the target application is detected, it indicates that the terminal misuses or improperly uses the URSP rule. This may avoid the problem that a detection process is complicated because all PDU sessions need to be detected in the related technology, thereby improving efficiency of detecting the URSP rule of the terminal.

Optionally, in this embodiment of the present disclosure, the eighth message further includes a PDR. The foregoing step 602 may be specifically implemented by the following step 602a.

Step 602a: The fourth communication device sets the PDR in the target PDU session, and evaluates the execution of the first URSP rule in the target PDU session based on a traffic detection result of the PDR.

In this embodiment of the present disclosure, a PDR is set only in the PDU session in which the traffic of the target application should not exist, and once the traffic of the target application is detected, it indicates that the terminal misuses or improperly uses the URSP rule, thereby improving efficiency of detecting the URSP rule of the terminal.

The following takes an example in which the first communication device is a PCF, the second communication device is an NWDAF, the third communication device is an SMF, and the fourth communication device is a UPF, to describe the URSP rule optimization method provided in this embodiment of the present disclosure. It should be noted that a network element name in the following examples is only an example. In practical application, other network element names may also be used. This is not limited in this embodiment of the present disclosure.

### Example 1

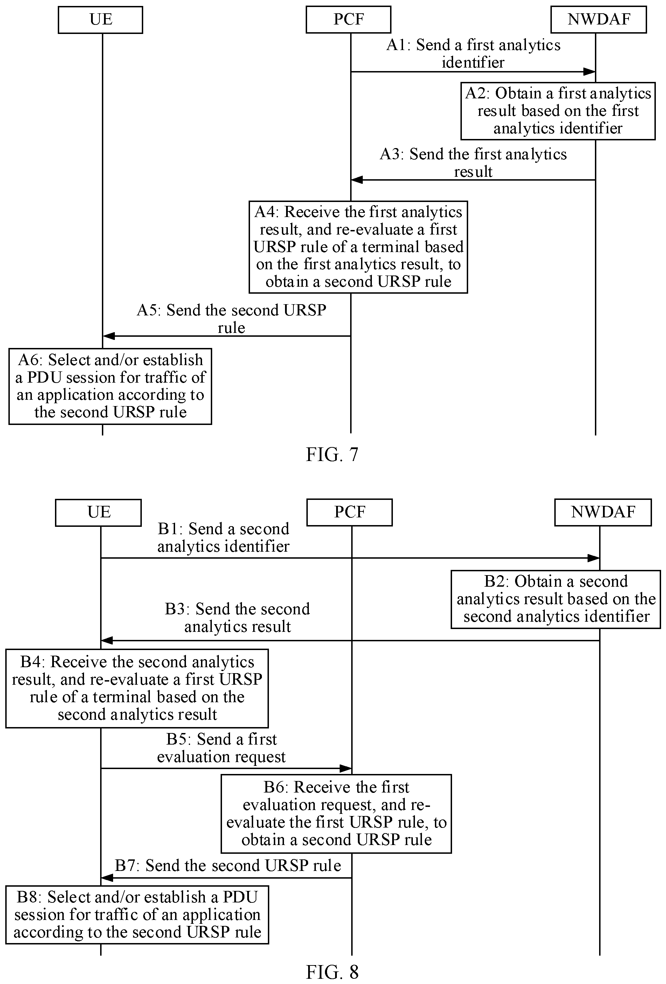

As shown in FIG. 7, the technical solution provided in this embodiment may be specifically realized through the following steps.

Step A1: A PCF sends a first analytics identifier to an NWDAF. Through signaling: Nnwdaf_AnalyticsInfo Request or Nnwdaf_AnalyticsSubscription Request

Step A2: The NWDAF obtains a first analytics result based on the first analytics identifier, where the first analytics result is an analytics result and/or a prediction result corresponding to the first analytics identifier. Specifically, the NWDAF may obtain the first analytics result by analyzing a first analytics object based on the first analytics identifier. The first analytics identifier indicates the first analytics object, and the first analytics object includes at least one of the following: an access mode, a DN, and a slice.

Step A3: The NWDAF sends a first analytics result to the PCF. Through signaling: Nnwdaf_AnalyticsInfo Response or Nnwdaf_AnalyticsSubscription Notify

Step A4: The PCF receives the first analytics result sent by the NWDAF, and re-evaluates the first URSP rule of the terminal based on the first analytics result, to obtain the second URSP rule. The re-evaluating is used to determine whether the first URSP rule needs to be updated, and in a case that the first URSP rule needs to be updated, the first communication device performs a target operation on the first URSP rule, to obtain the second URSP rule.

The target operation includes at least one of the following:
adjusting precedence of a first route selection descriptor in a first traffic descriptor in the first URSP rule;
adjusting precedence of a first traffic descriptor in the first URSP rule;
adjusting a parameter in a first route selection descriptor in a first traffic descriptor in the first URSP rule;
adding a new route selection descriptor to a first traffic descriptor in the first URSP rule;
stopping using a first route selection descriptor in a first traffic descriptor in the first URSP rule;
stopping using a first traffic descriptor in the first URSP rule; and
generating a new URSP rule.

Step A5: The PCF sends the second URSP rule to the terminal.

Step A6: The terminal selects and/or establishes a PDU session for traffic of an application according to the second URSP rule.

### Example 2

As shown in FIG. 8, the technical solution provided in this embodiment may be specifically realized through the following steps.

Step B1: A terminal sends a second analytics identifier to an NWDAF.

Step B2: The NWDAF obtains a second analytics result based on the second analytics identifier, where the second analytics result is an analytics result and/or a prediction result corresponding to the second analytics identifier. Specifically, the NWDAF may obtain the second analytics result by analyzing a second analytics object based on the second analytics identifier. The second analytics identifier indicates the second analytics object, and the second analytics object includes at least one of the following: an access mode, a DN, and a slice.

Step B3: The NWDAF sends a second analytics result to the terminal.

Step B4: The terminal receives the second analytics result sent by the NWDAF, and re-evaluates the first URSP rule of the terminal based on the second analytics result, where the re-evaluating is used to determine whether the first URSP rule needs to be updated.

Step B5: The terminal sends a first evaluation request to the PCF in a case that the first URSP rule needs to be updated, where the first evaluation request is used to request the PCF to re-evaluate the first URSP rule. The first evaluation request may be sent by using an NAS message.

Step B6: The PCF receives the first evaluation request sent by the terminal, and re-evaluates the first URSP rule of the terminal, to obtain a second URSP rule.

Step B7: The PCF sends the second URSP rule to the terminal.

Step B8: The terminal selects and/or establishes a PDU session for traffic of an application according to the second URSP rule.

### Example 3

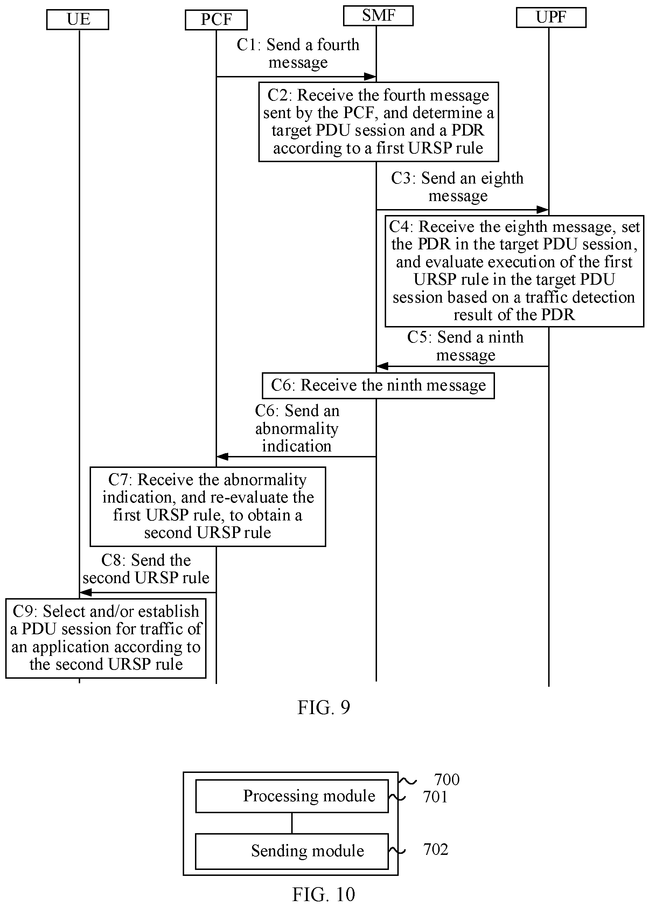

As shown in FIG. 9, the technical solution provided in this embodiment may be specifically realized through the following steps.

Step C1: A PCF sends a fourth message to an SMF, where the fourth message includes a first URSP rule of a terminal, and the fourth message is used to evaluate execution of the first URSP rule. The fourth message is also used for the SMF to generate a PDR, to detect whether traffic of a target application has appeared in a specific PDU session.

Step C2: The SMF receives the fourth message sent by the PCF, and determines a target PDU session and the PDR according to the first URSP rule. The PDR is used in the target PDU session.

Step C3: The SMF sends an eighth message to a UPF, where the eighth message includes a PDR and a PDU session to which the PDR is applied. The SMF may also indicate the UPF: when the traffic of the target application is detected through the PDR, the UPF should send a notification to the SMF, where the notification includes a parameter of the PDU session in which the traffic of the target application is detected, and the parameter includes at least one of the following: an SSC mode, a DNN, S-NSSAI, and an access mode.

The target PDU session is a PDU session in which traffic of a target application should not exist, and the traffic of the target application is traffic for a PDU session matched by the terminal according to the first URSP rule.

Step C4: The UPF receives the eighth message sent by the SMF, sets the PDR in the target PDU session, and evaluates the execution of the first URSP rule in the target PDU session based on a traffic detection result of the PDR.

Step C5: In a case of detecting the traffic of the target application in the target PDU session, the UPF sends a ninth message to the SMF, where the ninth message is used to indicate that the first URSP rule is executed abnormally.

Step C6: The SMF receives the ninth message sent by the UPF, and sends an abnormality indication to the PCF, where the abnormality indication indicates that the first URSP rule is executed abnormally.

Step C7: The PCF receives the abnormality indication sent by the SMF, and re-evaluates the first URSP rule, to obtain a second URSP rule.

Step C8: The PCF sends the second URSP rule to the terminal.

Step C9: The terminal selects and/or establishes a PDU session for traffic of an application according to the second URSP rule.

The URSP rule optimization method provided in this embodiment of the present disclosure may be executed by a URSP rule optimization apparatus. In this embodiment of the present disclosure, the URSP rule optimization apparatus provided in this embodiment of the present disclosure is described by using an example in which the URSP rule optimization apparatus performs the URSP rule optimization method.

An embodiment of the present disclosure provides a URSP rule optimization apparatus, applied to a first communication device. As shown in FIG. 10, the URSP rule optimization apparatus 700 includes: a processing module 701 and a sending module 702. The processing module 701 is configured to re-evaluate a first URSP rule of a terminal based on target information, to obtain a second URSP rule. The sending module 702 is configured to send a first message to a terminal. The target information includes at least one of the following: a first analytics result, a first evaluation request, and an abnormality indication; and the first analytics result is an analytics result and/or a prediction result requested by the first communication device, the first evaluation request is used for the terminal to request a re-evaluation on the first URSP rule, and the abnormality indication indicates that the first URSP rule is executed abnormally. The first message includes the second URSP rule; and the second URSP rule is used for the terminal to select and/or establish a PDU session for traffic of an application.

Optionally, in this embodiment of the present disclosure, the processing module 701 is specifically configured to re-evaluate the first URSP rule based on the target information; the re-evaluating is used to determine whether the first URSP rule needs to be updated; and in a case that the first URSP rule needs to be updated, a target operation is performed on the first URSP rule, to obtain the second URSP rule.

The target operation includes at least one of the following:
adjusting precedence of a first route selection descriptor in a first traffic descriptor in the first URSP rule;
adjusting precedence of a first traffic descriptor in the first URSP rule;
adjusting a parameter in a first route selection descriptor in a first traffic descriptor in the first URSP rule;
adding a new route selection descriptor to a first traffic descriptor in the first URSP rule;
stopping using a first route selection descriptor in a first traffic descriptor in the first URSP rule;
stopping using a first traffic descriptor in the first URSP rule; and
generating a new URSP rule.

Optionally, in this embodiment of the present disclosure, the adjusting a parameter in a first route selection descriptor in a first traffic descriptor in the first URSP rule includes at least one of the following:
adjusting an access mode in the first route selection descriptor, and changing the access mode into an access mode for which performance indicated by the first analytics result meets a first condition;
adjusting a DNN in the first route selection descriptor, and changing the DNN into a DNN for which performance indicated by the first analytics result meets a second condition; and
adjusting S-NSSAI in the first route selection descriptor, and changing the S-NSSAI into S-NSSAI for which performance indicated by the first analytics result meets a third condition.

Optionally, in this embodiment of the present disclosure, the URSP rule optimization apparatus 600 further includes: a receiving module. The sending module 702 is further configured to send a second message to the second communication device before the processing module 701 re-evaluates the first URSP rule based on the target information, where the second message includes a first analytics identifier; and the second message is used to obtain an analytics result and/or a prediction result corresponding to the first analytics identifier. The receiving module is configured to receive a third message sent by the second communication device, where the third message includes a first analytics result corresponding to the first analytics identifier.

Optionally, in this embodiment of the present disclosure, the first analytics identifier includes at least one of the following: load level information, service experience, network function load information, network performance, UE mobility, UE communication, an abnormal behaviour, user data congestion, quality of service sustainability, session management congestion control experience, redundant transmission experience, WLAN performance, UE dispersion, and DN performance.

Optionally, in this embodiment of the present disclosure, the processing module 701 is specifically configured to re-evaluate, based on performance of a first analytics object indicated by the first analytics result, the first analytics object in the first URSP rule, to obtain the second URSP rule. The first analytics object includes at least one of the following: an access mode, a DN, and a slice.

Optionally, in this embodiment of the present disclosure, in a case that the first analytics identifier is the load level information, the first analytics result indicates slice performance; the first analytics result includes at least one of the following: a quantity of registered terminals, a quantity of established PDU sessions, a quantity of used resources, a resource utilization threshold, a resource utilization threshold in time domain, and a load level; and/or
in a case that the first analytics identifier is the service experience, the first analytics result indicates first access mode performance; the first analytics result includes at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; and/or
in a case that the first analytics identifier is the WLAN performance, the first analytics result indicates second access mode performance; the first analytics result includes at least one of the following: an RSSI, an uplink data rate or a downlink data rate, and uplink data traffic or downlink data traffic; and/or
in a case that the first analytics identifier is the DN performance, the first analytics result indicates the DN performance; the first analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

Optionally, in this embodiment of the present disclosure, in a case that the first analytics identifier is the service experience, the first analytics result indicates at least one of the following: slice performance, access mode performance, and DN performance.

In a case that the first analytics result indicates the slice performance, the first analytics result includes at least one of the following: a quantity of registered terminals, a quantity of established PDU sessions, a quantity of used resources, a resource utilization threshold, a resource utilization threshold in time domain, and a load level; and/or
in a case that the first analytics result indicates the access mode performance, the first analytics result includes first access mode performance and/or second access mode performance; the first access mode performance includes at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; the second access mode performance includes at least one of the following: an RSSI, an uplink data rate or a downlink data rate, and uplink data traffic or downlink data traffic; and/or
in a case that the first analytics result indicates the DN performance, the first analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

Optionally, in this embodiment of the present disclosure, the processing module 701 is specifically configured to: in a case that at least one of the first evaluation request and the abnormality indication is received, re-evaluate the first URSP rule, to obtain the second URSP rule.

Optionally, in this embodiment of the present disclosure, the URSP rule optimization apparatus 700 further includes: a receiving module. The sending module 702 is further configured to send a fourth message to a third communication device before the processing module 701 re-evaluates the first URSP rule of the terminal based on the target information, to obtain the second URSP rule; and the fourth message includes the first URSP rule, and the fourth message is used to evaluate execution of the first URSP rule. The receiving module is configured to receive the abnormality indication sent by the third communication device.

Optionally, in this embodiment of the present disclosure, the fourth message further includes: a first IP descriptor; and the first IP descriptor is used to evaluate the execution of the first URSP rule. The processing module 701 is further configured to map a first traffic descriptor in the first URSP rule to the first IP descriptor before the sending module 702 sends the fourth message to the third communication device. The first traffic descriptor includes at least one of the following: an application descriptor, a domain descriptor, a data network name, and a connection capability; and the first IP descriptor is a destination IP 3 tuple.

In the URSP rule optimization apparatus according to this embodiment of the present disclosure, in a process that the terminal selects and/or establishes the PDU session for the traffic of the application, the apparatus may re-evaluate the first URSP rule of the terminal based on at least one of the first analytics result, the first evaluation request, and the abnormality indication, to obtain the second URSP rule. Then the apparatus sends the second URSP rule to the terminal, so that the terminal selects and/or establishes the PDU session for the traffic of the application according to the second URSP rule. In this way, the terminal may more intelligently select and/or establish the PDU session for the traffic of the application according to an optimized URSP rule, thereby matching the traffic of the application to a PDU session with better performance.

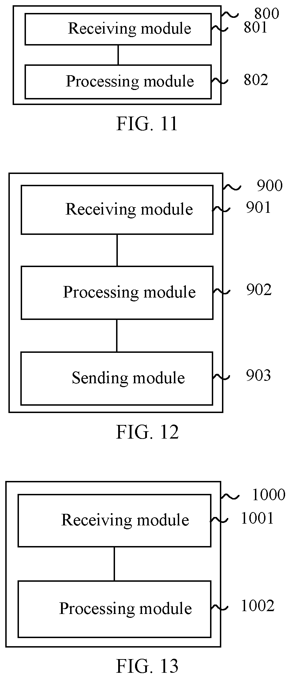

An embodiment of the present disclosure provides a URSP rule optimization apparatus, applied to a terminal. As shown in FIG. 11, the URSP rule optimization apparatus 800 includes: a receiving module 801 and a processing module 802. The receiving module 801 is configured to receive a first message from a first communication device, where the first message includes a second URSP rule, and the second URSP rule is: a URSP rule obtained after a first URSP rule of the terminal is re-evaluated. The processing module 802 is configured to select and/or establish a PDU session for traffic of an application according to the second URSP rule.

Optionally, in this embodiment of the present disclosure, the URSP rule optimization apparatus 800 further includes: a sending module. The sending module is configured to send a first evaluation request to the first communication device before the receiving module 801 receives the first message from the first communication device, where the first evaluation request is used to request the first communication device to re-evaluate the first URSP rule.

Optionally, in this embodiment of the present disclosure, the processing module 802 is further configured to re-evaluate the first URSP rule based on a second analytics result before the sending module sends the first evaluation request to the first communication device, where the re-evaluating is used to determine whether the first URSP rule needs to be updated. The sending module is specifically configured to send the first evaluation request to the first communication device in a case that the first URSP rule needs to be updated. The second analytics result is an analytics result and/or a prediction result requested by the terminal.

Optionally, in this embodiment of the present disclosure, the processing module 802 is specifically configured to re-evaluate, based on performance of a second analytics object indicated by the second analytics result, the second analytics object in the first URSP rule. The second analytics object includes at least one of the following: an access mode, a DN, and a slice.

Optionally, in this embodiment of the present disclosure, the sending module is further configured to send a sixth message to the second communication device before sending the first evaluation request to the first communication device, where the sixth message includes a second analytics identifier, and the sixth message is used to obtain an analytics result and/or a prediction result corresponding to the second analytics identifier. The receiving module 801 is further configured to receive a seventh message sent by the second communication device, where the seventh message includes a second analytics result corresponding to the second analytics identifier.

Optionally, in this embodiment of the present disclosure, the second analytics identifier includes at least one of the following: load level information, service experience, network function load information, network performance, UE mobility, UE communication, an abnormal behaviour, user data congestion, quality of service sustainability, session management congestion control experience, redundant transmission experience, WLAN performance, UE dispersion, and DN performance.

Optionally, in this embodiment of the present disclosure, in a case that the second analytics identifier is the load level information, the second analytics result indicates slice performance; the second analytics result includes at least one of the following: a quantity of registered terminals, a quantity of established PDU sessions, a quantity of used resources, a resource utilization threshold, a resource utilization threshold in time domain, and a load level; and/or
in a case that the second analytics identifier is the service experience, the second analytics result indicates first access mode performance; the second analytics result includes at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; and/or
in a case that the second analytics identifier is the WLAN performance, the second analytics result indicates second access mode performance; the second analytics result includes at least one of the following: an RSSI, an uplink data rate or a downlink data rate, and uplink data traffic or downlink data traffic; and/or
in a case that the second analytics identifier is the DN performance, the second analytics result indicates the DN performance; the second analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

Optionally, in this embodiment of the present disclosure, in a case that the second analytics identifier is the service experience, the second analytics result indicates at least one of the following: slice performance, access mode performance, and DN performance, where
in a case that the second analytics result indicates the slice performance, the second analytics result includes at least one of the following: a quantity of registered terminals, a quantity of established PDU sessions, a quantity of used resources, a resource utilization threshold, a resource utilization threshold in time domain, and a load level; and/or
in a case that the second analytics result indicates the access mode performance, the second analytics result includes first access mode performance and/or second access mode performance; the first access mode performance includes at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; the second access mode performance includes at least one of the following: an RSSI, an uplink data rate or a downlink data rate, and uplink data traffic or downlink data traffic; and/or
in a case that the second analytics result indicates the DN performance, the second analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

In the URSP rule optimization apparatus according to this embodiment of the present disclosure, the apparatus may more intelligently select and/or establish a PDU session for traffic of an application according to a re-evaluated URSP rule (that is, an optimized URSP rule).

An embodiment of the present disclosure provides a URSP rule optimization apparatus, applied to a second communication device. As shown in FIG. 12, the URSP rule optimization apparatus 900 includes: a receiving module 901, a processing module 902, and a sending module 903. The receiving module 901 is configured to receive a target message from a target device, where the target message includes a target analytics identifier; and the target message is used for the target device to obtain an analytics result and/or a prediction result corresponding to the target analytics identifier. The processing module 902 is configured to obtain a target analytics result based on the target analytics identifier, where the target analytics result is used for the target device to re-evaluate a first URSP rule of a terminal. The sending module 903 is configured to send the target analytics result to the target device.

Optionally, in this embodiment of the present disclosure, the processing module 902 is specifically configured to obtain the target analytics result by analyzing a target analytics object based on the target analytics identifier. The target analytics identifier indicates the target analytics object; and the target analytics object includes at least one of the following: an access mode, a DN, and a slice.

Optionally, in this embodiment of the present disclosure, in a case that the target analytics identifier is the load level information, the target analytics result indicates slice performance; the target analytics result includes at least one of the following: a quantity of registered terminals, a quantity of established PDU sessions, a quantity of used resources, a resource utilization threshold, a resource utilization threshold in time domain, and a load level; and/or
in a case that the target analytics identifier is service experience, the target analytics result indicates first access mode performance; the target analytics result includes at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; and/or
in a case that the target analytics identifier is WLAN performance, the target analytics result indicates second access mode performance, and the target analytics result includes at least one of the following: an RSSI, an uplink data rate or a downlink data rate, and uplink data traffic or downlink data traffic; and/or
in a case that the target analytics identifier is DN performance, the target analytics result indicates DN performance, and the target analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

Optionally, in this embodiment of the present disclosure, in a case that the target analytics identifier is the service experience, the target analytics result indicates at least one of the following: slice performance, access mode performance, and DN performance, where
in a case that the target analytics result indicates the slice performance, the target analytics result includes at least one of the following: a quantity of registered terminals, a quantity of established PDU sessions, a quantity of used resources, a resource utilization threshold, a resource utilization threshold in time domain, and a load level; and/or
in a case that the target analytics result indicates the access mode performance, the target analytics result includes first access mode performance and/or second access mode performance; the first access mode performance includes at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; the second access mode performance includes at least one of the following: an RSSI, an uplink data rate or a downlink data rate, and uplink data traffic or downlink data traffic; and/or
in a case that the target analytics result indicates the DN performance, the target analytics result includes at least one of the following: an analyzed DNN, a predicted DNN, S-NSSAI, an accessed application server instance address, and a performance index for accessing the application server address, where the performance index includes at least one of the following: an average traffic rate, a maximum traffic rate, an average packet delay, a maximum packet delay, and an average packet loss rate.

Optionally, in this embodiment of the present disclosure, the target analytics identifier includes at least one of the following: load level information, service experience, network function load information, network performance, UE mobility, UE communication, an abnormal behaviour, user data congestion, quality of service sustainability, session management congestion control experience, redundant transmission experience, WLAN performance, UE dispersion, and DN performance.

Optionally, in this embodiment of the present disclosure, the target device is the first communication device. The target message is a second message; and the target analytics identifier is a first analytics identifier.

Optionally, in this embodiment of the present disclosure, the target device is the terminal. The target message is a sixth message; and the target analytics identifier is a second analytics identifier.

In the URSP rule optimization apparatus according to this embodiment of the present disclosure, the apparatus may receive the target message from the target device, obtain the target analytics result based on the target analytics identifier in the target message, and then send the target analytics result to the target device, so that the target device re-evaluates the first URSP rule of the terminal based on the target analytics result. Finally, the terminal may more intelligently select and/or establish a PDU session for traffic of the application according to a re-evaluated URSP rule (that is, an optimized URSP rule).

An embodiment of the present disclosure provides a URSP rule optimization apparatus, applied to a third communication device. As shown in FIG. 13, the URSP rule optimization apparatus 1000 includes: a receiving module 1001 and a processing module 1002. The receiving module 1001 is configured to receive a fourth message from a first communication device, where the fourth message includes a first URSP rule of a terminal. The processing module 1002 is configured to evaluate execution of the first URSP rule according to the first URSP rule.

Optionally, in this embodiment of the present disclosure, the URSP rule optimization apparatus 1000 further includes: a sending module. The sending module is configured to send an abnormality indication to the first communication device after the processing module 1002 evaluates the execution of the first URSP rule according to the first URSP rule, where the abnormality indication indicates that the first URSP rule is executed abnormally.

Optionally, in this embodiment of the present disclosure, the processing module 1002 is specifically configured to send an eighth message to a fourth communication device; the eighth message includes a target PDU session identifier; the eighth message is used for the fourth communication device to evaluate execution of a first URSP rule in a target PDU session corresponding to the target PDU session identifier; and receive a ninth message sent by the fourth communication device, where the ninth message indicates that the first URSP rule is executed abnormally. The target PDU session is a PDU session in which traffic of a target application should not exist; and the traffic of the target application is traffic for a PDU session matched by the terminal according to the first URSP rule.

Optionally, in this embodiment of the present disclosure, the eighth message further includes: a PDR, where the PDR is used for the fourth communication device to evaluate the execution of the first URSP rule.

Optionally, in this embodiment of the present disclosure, the processing module 1002 is further configured to map a second traffic descriptor in the first URSP rule to the second IP descriptor before the sending module sends the eighth message to the fourth communication device. The PDR is a PDR generated based on the second IP descriptor; the second traffic descriptor includes at least one of the following: an application descriptor, a domain descriptor, a data network name, and a connection capability; and the second IP descriptor is a destination IP 3 tuple.

Optionally, in this embodiment of the present disclosure, the fourth message further includes: a first IP descriptor; and the PDR is a PDR generated based on the first IP descriptor.

In the URSP rule optimization apparatus according to this embodiment of the present disclosure, when the first communication device monitors the first URSP rule of the terminal, if it is required to determine whether traffic of the application correctly matches a corresponding PDU session, the first communication device may send a fourth message to the third communication device, so that the apparatus evaluates the execution of the first URSP rule of the terminal. In a case of determining that the first URSP rule is executed abnormally, the apparatus sends an abnormality indication to the first communication device, so that the first communication device may re-evaluate the first URSP rule.

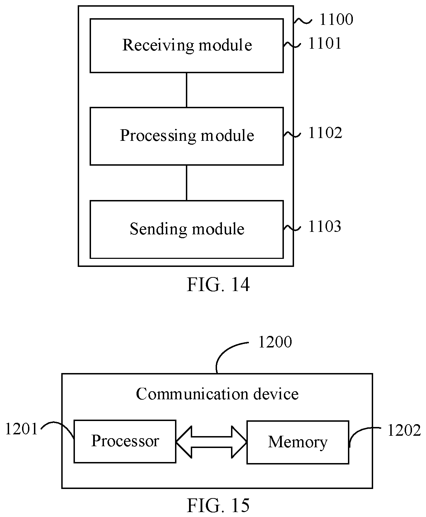

An embodiment of the present disclosure provides a URSP rule optimization apparatus, applied to a fourth communication device. As shown in FIG. 14, the URSP rule optimization apparatus 1100 includes: a receiving module 1101, a processing module 1102, and a sending module 1103. The receiving module 1101 is configured to receive an eighth message from a third communication device, where the eighth message includes a target PDU session identifier. The processing module 1102 is configured to evaluate execution of a first URSP rule of a terminal in a target PDU session corresponding to the target PDU session identifier. The sending module 1103 is configured to send a ninth message to the third communication device. The target PDU session is a PDU session in which traffic of a target application should not exist; the traffic of the target application is traffic for a PDU session matched by the terminal according to the first URSP rule; and the ninth message indicates that the first URSP rule is executed abnormally.

Optionally, in this embodiment of the present disclosure, the eighth message further includes a PDR. The processing module 1102 is specifically configured to: set the PDR in the target PDU session, and evaluate the execution of the first URSP rule in the target PDU session based on a traffic detection result of the PDR.

Optionally, in this embodiment of the present disclosure, the ninth message indicates: the traffic of the target application is detected in the target PDU session.

In the URSP rule optimization apparatus according to this embodiment of the present disclosure, the apparatus may detect only the PDU session in which the traffic of the target application should not exist, and once the traffic of the target application is detected, it indicates that the terminal misuses or improperly uses the URSP rule. This may avoid the problem that a detection process is complicated because all PDU sessions need to be detected in the related technology, thereby improving efficiency of detecting the URSP rule of the terminal.

The URSP rule optimization apparatus in this embodiment of the present disclosure may be an electronic device, for example, an electronic device with an operating system, or may be a component in the electronic device, for example, an integrated circuit or a chip. The electronic device may be a terminal, or another device other than the terminal. For example, the terminal may include but is not limited to the foregoing listed types of the terminal 11. The another device may be a server, a network attached storage (NAS), and the like. This is not specifically limited in this embodiment of the present disclosure.

The URSP rule optimization apparatus provided in this embodiment of the present disclosure can implement the processes implemented in the foregoing method embodiment, and a same technical effect can be achieved. To avoid repetition, details are not described herein again.

Optionally, as shown in FIG. 15, an embodiment of the present disclosure further provides a communication device 1200, including a processor 1201 and a memory 1202. The memory 1202 stores a program or an instruction executable on the processor 1201. For example, in a case that the communication device 1200 is a terminal, when the program or the instruction is executed by the processor 1201, the steps corresponding to the terminal in the URSP rule optimization method embodiment are implemented, and a same technical effect can be achieved. In a case that the communication device 1200 is a network side device, when the program or the instruction is executed by the processor 1201, the steps corresponding to the first communication device, the second communication device, the third communication device, or the fourth communication device in the URSP rule optimization method embodiment are implemented, and a same technical effect can be achieved. To avoid repetition, details are not described herein again.

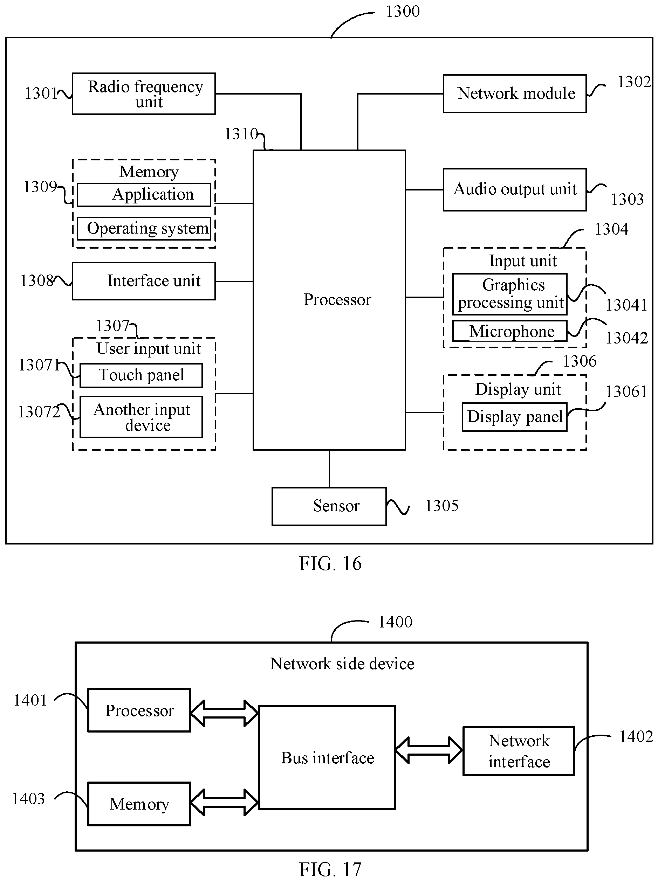

An embodiment of the present disclosure further provides a terminal, including a processor and a communication interface, where the communication interface is configured to receive a first message from a first communication device, and the first message includes a second URSP rule; and the processor is configured to select and/or establish a PDU session for traffic of an application according to the second URSP rule, where the second URSP rule is: a URSP rule obtained after a first URSP rule of the terminal is re-evaluated. The terminal embodiment is corresponding to the terminal side method, each implementation process and implementation of the method embodiment may be applied to the terminal embodiment, and a same technical effect can be achieved. Specifically, FIG. 16 is a schematic diagram of a hardware structure of a terminal according to an embodiment of the present disclosure.

The terminal 1300 includes but is not limited to: at least some of the following components: a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art may understand that the terminal 1300 may further include a power supply (such as a battery) that supplies power to each component. The power supply may be logically connected to the processor 1310 through a power management system, to implement functions such as charging and discharging management, and power consumption management by using the power management system. The terminal structure shown in FIG. 16 constitutes no limitation on the terminal, and the terminal may include more or fewer components than those shown in the figure, or combine some components, or have different component arrangements. Details are not described herein again.

It should be understood that in this embodiment of the present disclosure, the input unit 1304 may include a graphics processing unit (GPU) 13041 and a microphone 13042. The graphics processing unit 13041 processes image data of a static picture or a video obtained by an image capture apparatus (for example, a camera) in a video capture mode or an image capture mode. The display unit 1306 may include a display panel 13061, and the display panel 13061 may be configured in a form of a liquid crystal display, an organic light-emitting diode, or the like. The user input unit 1307 includes at least one of a touch panel 13071 and another input device 13072. The touch panel 13071 is also referred to as a touchscreen. The touch panel 13071 may include two parts: a touch detection apparatus and a touch controller. The another input device 13072 may include but is not limited to a physical keyboard, a functional button (such as a volume control button or a power on/off button), a trackball, a mouse, and a joystick. Details are not described herein again.

In this embodiment of the present disclosure, after receiving downlink data from a network side device, the radio frequency unit 1301 may transmit the downlink data to the processor 1310 for processing. In addition, the radio frequency unit 1301 may send uplink data to the network side device. Generally, the radio frequency unit 1301 includes but is not limited to an antenna, an amplifier, a transceiver, a coupler, a low noise amplifier, a duplexer, and the like.

The memory 1309 may be configured to store a software program or an instruction and various data. The memory 1309 may mainly include a first storage area for storing a program or an instruction and a second storage area for storing data. The first storage area may store an operating system, and an application or an instruction required by at least one function (for example, a sound playing function or an image playing function). In addition, the memory 1309 may be a volatile memory or a non-volatile memory, or the memory 1309 may include a volatile memory and a non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1309 in this embodiment of the present disclosure includes but is not limited to these memories and any memory of another proper type.

The processor 1310 may include one or more processing units. Optionally, an application processor and a modem processor are integrated into the processor 1310. The application processor mainly processes an operating system, a user interface, an application, or the like. The modem processor mainly processes a wireless communication signal, for example, a baseband processor. It can be understood that the foregoing modem processor may not be integrated into the processor 1310.

The radio frequency unit 1301 is configured to receive a first message from a first communication device, where the first message includes a second URSP rule, and the second URSP rule is: a URSP rule obtained after a first URSP rule of the terminal is re-evaluated. The processor 1310 is configured to select and/or establish a PDU session for traffic of an application according to the second URSP rule.

Optionally, in this embodiment of the present disclosure, the radio frequency unit 1301 is further configured to send a first evaluation request to the first communication device before receiving the first message from the first communication device, where the first evaluation request is used to request the first communication device to re-evaluate the first URSP rule.

Optionally, in this embodiment of the present disclosure, the processor 1310 is further configured to re-evaluate the first URSP rule based on a second analytics result before sending the first evaluation request to the first communication device, where the re-evaluating is used to determine whether the first URSP rule needs to be updated. The radio frequency unit 1301 is specifically configured to send the first evaluation request to the first communication device in a case that the first URSP rule needs to be updated. The second analytics result is an analytics result and/or a prediction result requested by the terminal.

Optionally, in this embodiment of the present disclosure, the processor 1310 is specifically configured to re-evaluate, based on performance of a second analytics object indicated by the second analytics result, the second analytics object in the first URSP rule. The second analytics object includes at least one of the following: an access mode, a DN, and a slice.

Optionally, in this embodiment of the present disclosure, the radio frequency unit 1301 is further configured to send a sixth message to the second communication device before sending the first evaluation request to the first communication device, where the sixth message includes a second analytics identifier, and the sixth message is used to obtain an analytics result and/or a prediction result corresponding to the second analytics identifier. The radio frequency unit 1301 is further configured to receive a seventh message sent by the second communication device, where the seventh message includes a second analytics result corresponding to the second analytics identifier.

In this embodiment of the present disclosure, the terminal may more intelligently select and/or establish a PDU session for traffic of an application according to a re-evaluated URSP rule (that is, an optimized URSP rule).

An embodiment of the present disclosure further provides a network side device, including a processor and a communication interface. This network side device embodiment corresponds to the foregoing method embodiment on the network side device. Each implementation process and implementation of the foregoing method embodiment may be applicable to this network side device embodiment, and a same technical effect can be achieved.

In an example, the network side device is a first communication device, including a processor and a communication interface, where the processor is configured to re-evaluate a first URSP rule of a terminal based on target information, to obtain a second URSP rule; and the communication interface is configured to send a first message to the terminal. The target information includes at least one of the following: a first analytics result, a first evaluation request, and an abnormality indication; and the first analytics result is an analytics result and/or a prediction result requested by the first communication device, the first evaluation request is used for the terminal to request a re-evaluation on the first URSP rule, and the abnormality indication indicates that the first URSP rule is executed abnormally. The first message includes the second URSP rule; and the second URSP rule is used for the terminal to select and/or establish a PDU session for traffic of an application.

In an example, the network side device is a second communication device, including a processor and a communication interface, where the communication interface is configured to receive a target message from a target device, the target message includes a target analytics identifier, and the target message is used for the target device to obtain an analytics result and/or a prediction result corresponding to the target analytics identifier; the processor is configured to obtain a target analytics result based on the target analytics identifier, where the target analytics result is used for the target device to re-evaluate a first URSP rule of a terminal; and the communication interface is further configured to send the target analytics result to the target device.

In an example, the network side device is a third communication device, including a processor and a communication interface, where the communication interface is configured to receive a fourth message from a first communication device, and the fourth message includes a first URSP rule of a terminal; and the processor is configured to evaluate execution of the first URSP rule according to the first URSP rule.

In an example, the network side device is a fourth communication device, including a processor and a communication interface, where the communication interface is configured to receive an eighth message from the third communication device; the eighth message includes a target PDU session identifier; the processor is configured to evaluate execution of a first URSP rule of a terminal in a target PDU session corresponding to the target PDU session identifier; and the communication interface is further configured to send a ninth message to the third communication device. The target PDU session is a PDU session in which traffic of a target application should not exist; the traffic of the target application is traffic for a PDU session matched by the terminal according to the first URSP rule; and the ninth message indicates that the first URSP rule is executed abnormally.

An embodiment of the present disclosure further provides a network side device. As shown in FIG. 17, the network device 1400 includes: a processor 1401, a network interface 1402, and a memory 1403. The network interface 1402 is, for example, a common public radio interface (CPRI).

Specifically, the network side device 1400 in this embodiment of the present invention further includes: an instruction or a program stored in the memory 1403 and executable on the processor 1401. The processor 1401 invokes the instruction or the program in the memory 1403 to perform the method performed by the modules shown in FIG. 10, FIG. 12, FIG. 13, or FIG. 14, and a same technical effect is achieved. To avoid repetition, details are not described herein again.

An embodiment of the present disclosure further provides a readable storage medium. The readable storage medium stores a program or an instruction. When the program or the instruction is executed by a processor, the processes of the URSP rule optimization method embodiment are implemented, and a same technical effect can be achieved. To avoid repetition, details are not described herein again.

The processor is a processor in the terminal in the foregoing embodiment. The readable storage medium includes a computer-readable storage medium, such as a computer read-only memory (ROM), a random access memory (RAM), a magnetic disk, or an optical disc.

An embodiment of the present disclosure further provides a chip. The chip includes a processor and a communication interface, and the communication interface is coupled to the processor. The processor is configured to run a program or an instruction to implement the processes of the URSP rule optimization method embodiment, and a same technical effect can be achieved. To avoid repetition, details are not described herein again.

It should be understood that the chip mentioned in this embodiment of the present disclosure may alternatively be referred to as a system-level chip, a system chip, a chip system, or an on-chip system chip.

An embodiment of the present disclosure also provides a computer program/program product, and the computer program/program product is stored in a storage medium. The computer program/program product is executed by at least one processor to implement the processes of the URSP rule optimization method embodiment, and a same technical effect can be achieved. To avoid repetition, details are not described herein again.

An embodiment of the present disclosure further provides a communication system, including: a terminal and a network side device, where the terminal may be configured to perform the steps of the URSP rule optimization method, and the network side device may be configured to perform the steps of the URSP rule optimization method.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by a statement "includes a..." does not preclude the presence of additional identical elements in the process, method, article, or apparatus that includes the element. In addition, it should be noted that the scope of the methods and apparatuses in the embodiments of the present disclosure is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present disclosure essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of the present disclosure.

The embodiments of the present disclosure are described above with reference to the accompanying drawings, but the present disclosure is not limited to the foregoing specific implementations, and the foregoing specific implementations are only illustrative and not restrictive. Under the enlightenment of the present disclosure, a person of ordinary skill in the art can make many forms without departing from the purpose of the present disclosure and the protection scope of the claims, all of which fall within the protection of the present disclosure.

## Claims

1. A user equipment route selection policy (URSP) rule optimization method, comprising:
re-evaluating, by a first communication device, a first URSP rule of a terminal based on target information, to obtain a second URSP rule; and
sending, by the first communication device, the second URSP rule to the terminal, wherein
the target information comprises at least one of the following: a first analytics result, a first evaluation request, and an abnormality indication; the first analytics result is an analytics result and/or a prediction result requested by the first communication device, the first evaluation request is used for the terminal to request a re-evaluation on the first URSP rule, and the abnormality indication indicates that the first URSP rule is executed abnormally; and the second URSP rule is used for the terminal to select and/or establish a protocol data unit (PDU) session for traffic of an application.

2. The method according to claim 1, wherein the re-evaluating, by a first communication device, a first URSP rule of a terminal based on target information, to obtain a second URSP rule comprises:
re-evaluating, by the first communication device, the first URSP rule based on the target information, wherein the re-evaluating is used to determine whether the first URSP rule needs to be updated; and
in a case that the first URSP rule needs to be updated, performing, by the first communication device, a target operation on the first URSP rule, to obtain the second URSP rule, wherein
the target operation comprises at least one of the following:
adjusting precedence of a first route selection descriptor in a first traffic descriptor in the first URSP rule;
adjusting precedence of a first traffic descriptor in the first URSP rule;
adjusting a parameter in a first route selection descriptor in a first traffic descriptor in the first URSP rule;
adding a new route selection descriptor to a first traffic descriptor in the first URSP rule;
stopping using a first route selection descriptor in a first traffic descriptor in the first URSP rule;
stopping using a first traffic descriptor in the first URSP rule; and
generating a new URSP rule.

3. The method according to claim 2, wherein the adjusting a parameter in a first route selection descriptor in a first traffic descriptor in the first URSP rule comprises at least one of the following:
adjusting an access mode in the first route selection descriptor, and changing the access mode into an access mode for which performance indicated by the first analytics result meets a first condition;
adjusting a data network name (DNN) in the first route selection descriptor, and changing the DNN into a DNN for which performance indicated by the first analytics result meets a second condition; and
adjusting single network slice selection assistance information (S-NSSAI) in the first route selection descriptor, and changing the S-NSSAI into S-NSSAI for which performance indicated by the first analytics result meets a third condition.

4. The method according to claim 1, wherein before the re-evaluating, by the first communication device, the first URSP rule based on the target information, the method further comprises:
sending, by the first communication device, a second message to a second communication device, wherein the second message comprises a first analytics identifier; and the second message is used to obtain an analytics result and/or a prediction result corresponding to the first analytics identifier; and
receiving, by the first communication device, a third message sent by the second communication device, wherein the third message comprises a first analytics result corresponding to the first analytics identifier.

5. The method according to claim 4, wherein the first analytics identifier comprises at least one of the following: load level information, service experience, network function load information, network performance, user equipment (UE) mobility, UE communication, an abnormal behaviour, user data congestion, quality of service sustainability, session management congestion control experience, redundant transmission experience, wireless local area network (WLAN) performance, UE dispersion, and data network (DN) performance.

6. The method according to claim 5, wherein the re-evaluating, by the first communication device, the first URSP rule based on the target information comprises:
re-evaluating, by the first communication device based on performance of a first analytics object indicated by the first analytics result, the first analytics object in the first URSP rule, wherein
the first analytics object comprises at least one of the following: an access mode, a DN, and a slice.

7. The method according to claim 5 or 6, wherein
in a case that the first analytics identifier is the load level information, the first analytics result indicates slice performance; the first analytics result comprises at least one of the following: a quantity of registered terminals, a quantity of established PDU sessions, a quantity of used resources, a resource utilization threshold, a resource utilization threshold in time domain, and a load level; and/or
in a case that the first analytics identifier is the service experience, the first analytics result indicates first access mode performance; the first analytics result comprises at least one of the following: a quality of service (QoS) flow bit rate, an uplink QoS flow packet delay or a downlink QoS flow packet delay, a quantity of transmitted packets, a quantity of retransmitted packets, a radio access technology (RAT) type, a frequency of serving cell, and access signal quality; and/or
in a case that the first analytics identifier is the WLAN performance, the first analytics result indicates second access mode performance; the first analytics result comprises at least one of the following: a received signal strength indicator (RSSI), an uplink data rate or a downlink data rate, and uplink data traffic or downlink data traffic; and/or
in a case that the first analytics identifier is the DN performance, the first analytics result indicates the DN performance; the first analytics result comprises at least one of the following: an analyzed DNN, a predicted DNN, S-NSSAI, an accessed application server instance address, and a performance index for accessing the application server address, wherein the performance index comprises at least one of the following: an average traffic rate, a maximum traffic rate, an average packet delay, a maximum packet delay, and an average packet loss rate.

8. The method according to claim 5 or 6, wherein
in a case that the first analytics identifier is the service experience, the first analytics result indicates at least one of the following: slice performance, access mode performance, and DN performance, wherein
in a case that the first analytics result indicates the slice performance, the first analytics result comprises at least one of the following: a quantity of registered terminals, a quantity of established PDU sessions, a quantity of used resources, a resource utilization threshold, a resource utilization threshold in time domain, and a load level; and/or
in a case that the first analytics result indicates the access mode performance, the first analytics result comprises first access mode performance and/or second access mode performance; the first access mode performance comprises at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; and the second access mode performance comprises at least one of the following: an RSSI, an uplink data rate or a downlink data rate, and uplink data traffic or downlink data traffic; and/or
in a case that the first analytics result indicates the DN performance, the first analytics result comprises at least one of the following: an analyzed DNN, a predicted DNN, S-NSSAI, an accessed application server instance address, and a performance index for accessing the application server address, wherein the performance index comprises at least one of the following: an average traffic rate, a maximum traffic rate, an average packet delay, a maximum packet delay, and an average packet loss rate.

9. The method according to claim 1, wherein the re-evaluating, by a first communication device, a first URSP rule of a terminal based on target information, to obtain a second URSP rule comprises:
in a case that at least one of the first evaluation request and the abnormality indication is received, re-evaluating, by the first communication device, the first URSP rule, to obtain the second URSP rule.

10. The method according to claim 1, wherein before the re-evaluating, by a first communication device, a first URSP rule of a terminal based on target information, to obtain a second URSP rule, the method further comprises:
sending, by the first communication device, a fourth message to a third communication device, wherein the fourth message comprises the first URSP rule, and the fourth message is used to evaluate execution of the first URSP rule; and
receiving, by the first communication device, the abnormality indication sent by the third communication device.

11. The method according to claim 10, wherein the fourth message further comprises: a first Internet protocol (IP) descriptor, and the first IP descriptor is used to evaluate the execution of the first URSP rule; and
before the sending, by the first communication device, a fourth message to a third communication device, the method further comprises:
mapping, by the first communication device, a first traffic descriptor in the first URSP rule to the first IP descriptor, wherein
the first traffic descriptor comprises at least one of the following: an application descriptor, a domain descriptor, a data network name, and a connection capability; and the first IP descriptor is a destination IP 3 tuple.

12. A URSP rule optimization method, comprising:
receiving, by a terminal, a second URSP rule from a first communication device; and
selecting and/or establishing, by the terminal, a PDU session for traffic of an application according to the second URSP rule, wherein
the second URSP rule is a URSP rule obtained after a first URSP rule of the terminal is re-evaluated.

13. The method according to claim 12, wherein before the receiving, by a terminal, a second URSP rule from a first communication device, the method further comprises:
sending, by the terminal, a first evaluation request to the first communication device, wherein
the first evaluation request is used to request the first communication device to re-evaluate the first URSP rule.

14. The method according to claim 13, wherein before the sending, by the terminal, a first evaluation request to the first communication device, the method further comprises:
re-evaluating, by the terminal, the first URSP rule based on a second analytics result, wherein the re-evaluating is used to determine whether the first URSP rule needs to be updated; and
the sending, by the terminal, a first evaluation request to the first communication device comprises:
sending, by the terminal, the first evaluation request to the first communication device in a case that the first URSP rule needs to be updated, wherein
the second analytics result is an analytics result and/or a prediction result requested by the terminal.

15. The method according to claim 14, wherein the re-evaluating, by the terminal, the first URSP rule based on a second analytics result comprises:
re-evaluating, by the terminal based on performance of a second analytics object indicated by the second analytics result, the second analytics object in the first URSP rule, wherein
the second analytics object comprises at least one of the following: an access mode, a DN, and a slice.

16. The method according to claim 14 or 15, wherein before the sending, by the terminal, a first evaluation request to the first communication device, the method further comprises:
sending, by the terminal, a sixth message to a second communication device, wherein the sixth message comprises a second analytics identifier; and the sixth message is used to obtain an analytics result and/or a prediction result corresponding to the second analytics identifier; and
receiving, by the terminal, a seventh message sent by the second communication device, wherein the seventh message comprises a second analytics result corresponding to the second analytics identifier.

17. The method according to claim 16, wherein the second analytics identifier comprises at least one of the following: load level information, service experience, network function load information, network performance, UE mobility, UE communication, an abnormal behaviour, user data congestion, quality of service sustainability, session management congestion control experience, redundant transmission experience, WLAN performance, UE dispersion, and DN performance.

18. The method according to claim 17, wherein
in a case that the second analytics identifier is the load level information, the second analytics result indicates slice performance; the second analytics result comprises at least one of the following: a quantity of registered terminals, a quantity of established PDU sessions, a quantity of used resources, a resource utilization threshold, a resource utilization threshold in time domain, and a load level; and/or
in a case that the second analytics identifier is the service experience, the second analytics result indicates first access mode performance; the second analytics result comprises at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; and/or
in a case that the second analytics identifier is the WLAN performance, the second analytics result indicates second access mode performance; the second analytics result comprises at least one of the following: an RSSI, an uplink data rate or a downlink data rate, and uplink data traffic or downlink data traffic; and/or
in a case that the second analytics identifier is the DN performance, the second analytics result indicates the DN performance; the second analytics result comprises at least one of the following: an analyzed DNN, a predicted DNN, S-NSSAI, an accessed application server instance address, and a performance index for accessing the application server address, wherein the performance index comprises at least one of the following: an average traffic rate, a maximum traffic rate, an average packet delay, a maximum packet delay, and an average packet loss rate.

19. The method according to claim 17, wherein
in a case that the second analytics identifier is the service experience, the second analytics result indicates at least one of the following: slice performance, access mode performance, and DN performance, wherein
in a case that the second analytics result indicates the slice performance, the second analytics result comprises at least one of the following: a quantity of registered terminals, a quantity of established PDU sessions, a quantity of used resources, a resource utilization threshold, a resource utilization threshold in time domain, and a load level; and/or
in a case that the second analytics result indicates the access mode performance, the second analytics result comprises first access mode performance and/or second access mode performance; the first access mode performance comprises at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; and the second access mode performance comprises at least one of the following: an RSSI, an uplink data rate or a downlink data rate, and uplink data traffic or downlink data traffic; and/or
in a case that the second analytics result indicates the DN performance, the second analytics result comprises at least one of the following: an analyzed DNN, a predicted DNN, S-NSSAI, an accessed application server instance address, and a performance index for accessing the application server address, wherein the performance index comprises at least one of the following: an average traffic rate, a maximum traffic rate, an average packet delay, a maximum packet delay, and an average packet loss rate.

20. A URSP rule optimization method, comprising:
receiving, by a second communication device, a target message from a target device, wherein the target message comprises a target analytics identifier; and the target message is used for the target device to obtain an analytics result and/or a prediction result corresponding to the target analytics identifier;
obtaining, by the second communication device, a target analytics result based on the target analytics identifier; and
sending, by the second communication device, the target analytics result to the target device, wherein
the target analytics result is used for the target device to re-evaluate a first URSP rule of a terminal.

21. The method according to claim 20, wherein the obtaining, by the second communication device, a target analytics result based on the target analytics identifier comprises:
obtaining, by the second communication device, the target analytics result by analyzing a target analytics object based on the target analytics identifier, wherein
the target analytics identifier indicates the target analytics object; and the target analytics object comprises at least one of the following: an access mode, a DN, and a slice.

22. The method according to claim 21, wherein
in a case that the target analytics identifier is load level information, the target analytics result indicates slice performance; the target analytics result comprises at least one of the following: a quantity of registered terminals, a quantity of established PDU sessions, a quantity of used resources, a resource utilization threshold, a resource utilization threshold in time domain, and a load level; and/or
in a case that the target analytics identifier is service experience, the target analytics result indicates first access mode performance; the target analytics result comprises at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; and/or
in a case that the target analytics identifier is WLAN performance, the target analytics result indicates second access mode performance, and the target analytics result comprises at least one of the following: an RSSI, an uplink data rate or a downlink data rate, and uplink data traffic or downlink data traffic; and/or
in a case that the target analytics identifier is DN performance, the target analytics result indicates the DN performance, and the target analytics result comprises at least one of the following: an analyzed DNN, a predicted DNN, S-NSSAI, an accessed application server instance address, and a performance index for accessing the application server address, wherein the performance index comprises at least one of the following: an average traffic rate, a maximum traffic rate, an average packet delay, a maximum packet delay, and an average packet loss rate.

23. The method according to claim 21, wherein
in a case that the target analytics identifier is service experience, the target analytics result indicates at least one of the following: slice performance, access mode performance, and DN performance, wherein
in a case that the target analytics result indicates the slice performance, the target analytics result comprises at least one of the following: a quantity of registered terminals, a quantity of established PDU sessions, a quantity of used resources, a resource utilization threshold, a resource utilization threshold in time domain, and a load level; and/or
in a case that the target analytics result indicates the access mode performance, the target analytics result comprises first access mode performance and/or second access mode performance; the first access mode performance comprises at least one of the following: a QoS flow bit rate, an uplink QoS flow packet delay or a downlink QoS flow packet delay, a quantity of transmitted packets, a quantity of retransmitted packets, a RAT type, a frequency of serving cell, and access signal quality; and the second access mode performance comprises at least one of the following: an RSSI, an uplink data rate or a downlink data rate, and uplink data traffic or downlink data traffic; and/or
in a case that the target analytics result indicates DN performance, the target analytics result comprises at least one of the following: an analyzed DNN, a predicted DNN, S-NSSAI, an accessed application server instance address, and a performance index for accessing the application server address, wherein the performance index comprises at least one of the following: an average traffic rate, a maximum traffic rate, an average packet delay, a maximum packet delay, and an average packet loss rate.

24. The method according to any one of claims 20 to 23, wherein the target analytics identifier comprises at least one of the following: load level information, service experience, network function load information, network performance, UE mobility, UE communication, an abnormal behaviour, user data congestion, quality of service sustainability, session management congestion control experience, redundant transmission experience, WLAN performance, UE dispersion, and DN performance.

25. The method according to claim 20 or 21, wherein the target device is a first communication device, wherein
the target message is a second message; and
the target analytics identifier is a first analytics identifier.

26. The method according to claim 20 or 21, wherein the target device is the terminal, wherein
the target message is a sixth message; and
the target analytics identifier is a second analytics identifier.

27. A URSP rule optimization method, comprising:
receiving, by a third communication device, a fourth message from a first communication device, wherein the fourth message comprises a first URSP rule of a terminal; and
evaluating, by the third communication device, execution of the first URSP rule according to the first URSP rule.

28. The method according to claim 27, wherein after the evaluating, by the third communication device, execution of the first URSP rule according to the first URSP rule, the method further comprises:
sending, by the third communication device, an abnormality indication to the first communication device, wherein
the abnormality indication indicates that the first URSP rule is executed abnormally.

29. The method according to claim 27, wherein the evaluating, by the third communication device, execution of the first URSP rule according to the first URSP rule comprises:
sending, by the third communication device, an eighth message to a fourth communication device, wherein the eighth message comprises a target PDU session identifier; and the eighth message is used for the fourth communication device to evaluate the execution of the first URSP rule in a target PDU session corresponding to the target PDU session identifier; and
receiving, by the third communication device, a ninth message sent by the fourth communication device, wherein the ninth message indicates that the first URSP rule is executed abnormally, wherein
the target PDU session is a PDU session in which traffic of a target application should not exist; and the traffic of the target application is traffic for a PDU session matched by the terminal according to the first URSP rule.

30. The method according to claim 29, wherein the eighth message further comprises: a packet detection rule (PDR), wherein the PDR is used for the fourth communication device to evaluate the execution of the first URSP rule.

31. The method according to claim 30, wherein before the sending, by the third communication device, an eighth message to a fourth communication device, the method further comprises:
mapping, by the third communication device, a second traffic descriptor in the first URSP rule to a second IP descriptor, wherein
the PDR is a PDR generated based on the second IP descriptor; and
the second traffic descriptor comprises at least one of the following: an application descriptor, a domain descriptor, a data network name, and a connection capability; and the second IP descriptor is a destination IP 3 tuple.

32. The method according to claim 30, wherein the fourth message further comprises: a first IP descriptor, wherein
the PDR is a PDR generated based on the first IP descriptor.

33. A URSP rule optimization method, comprising:
receiving, by a fourth communication device, an eighth message from a third communication device, wherein the eighth message comprises a target PDU session identifier;
evaluating, by the fourth communication device, execution of a first URSP rule of a terminal in a target PDU session corresponding to the target PDU session identifier; and
sending, by the fourth communication device, a ninth message to the third communication device, wherein
the target PDU session is a PDU session in which traffic of a target application should not exist; the traffic of the target application is traffic for a PDU session matched by the terminal according to the first URSP rule; and the ninth message indicates that the first URSP rule is executed abnormally.

34. The method according to claim 33, wherein the eighth message further comprises a PDR; and the evaluating, by the fourth communication device, execution of a first URSP rule of a terminal in a target PDU session corresponding to the target PDU session identifier comprises:
setting, by the fourth communication device, the PDR in the target PDU session, and evaluating the execution of the first URSP rule in the target PDU session based on a traffic detection result of the PDR.

35. The method according to claim 33 or 34, wherein the ninth message is used to indicate that the traffic of the target application is detected in the target PDU session.

36. A URSP rule optimization apparatus, comprising:
a processing module, configured to re-evaluate a first URSP rule of a terminal based on target information, to obtain a second URSP rule; and
a sending module, configured to send the second URSP rule to the terminal, wherein
the target information comprises at least one of the following: a first analytics result, a first evaluation request, and an abnormality indication; the first analytics result is an analytics result and/or a prediction result requested by a first communication device, the first evaluation request is used for the terminal to request a re-evaluation on the first URSP rule, and the abnormality indication indicates that the first URSP rule is executed abnormally; and the second URSP rule is used for the terminal to select and/or establish a PDU session for traffic of an application.

37. A URSP rule optimization apparatus, comprising:
a receiving module, configured to receive a second URSP rule from a first communication device; and
a processing module, configured to select and/or establish a PDU session for traffic of an application according to the second URSP rule, wherein
the second URSP rule is: a URSP rule obtained after a first URSP rule of the terminal is re-evaluated.

38. A URSP rule optimization apparatus, comprising:
a receiving module, configured to receive a target message from a target device, wherein the target message comprises a target analytics identifier; and the target message is used for the target device to obtain an analytics result and/or a prediction result corresponding to the target analytics identifier;
a processing module, configured to obtain a target analytics result based on the target analytics identifier; and
a sending module, configured to send the target analytics result to the target device, wherein
the target analytics result is used for the target device to re-evaluate a first URSP rule of a terminal.

39. A URSP rule optimization apparatus, comprising:
a receiving module, configured to receive a fourth message from a first communication device, wherein the fourth message comprises a first URSP rule of a terminal; and
a processing module, configured to evaluate execution of the first URSP rule according to the first URSP rule.

40. A URSP rule optimization apparatus, comprising:
a receiving module, configured to receive an eighth message from a third communication device, wherein the eighth message comprises a target PDU session identifier;
a processing module, configured to evaluate execution of a first URSP rule of a terminal in a target PDU session corresponding to the target PDU session identifier; and
a sending module, configured to send a ninth message to the third communication device, wherein
the target PDU session is a PDU session in which traffic of a target application should not exist; the traffic of the target application is traffic for a PDU session matched by the terminal according to the first URSP rule; and the ninth message indicates that the first URSP rule is executed abnormally.

41. A terminal, comprising a processor and a memory, wherein the memory stores a program or an instruction executable on the processor, and the program or the instruction is executed by the processor to implement the steps of the URSP rule optimization method according to any one of claims 12 to 19.

42. A network side device, comprising a processor and a memory, the memory stores a program or an instruction executable on the processor, and the program or the instruction is executed by the processor to implement the steps of the URSP rule optimization method according to any one of claims 1 to 11, the steps of the URSP rule optimization method according to any one of claims 20 to 26, the steps of the URSP rule optimization method according to any one of claims 27 to 32, or the steps of the URSP rule optimization method according to any one of claims 33 to 35.

43. A readable storage medium, wherein the readable storage medium stores a program or an instruction, and the program or the instruction is executed by a processor to implement the steps of the URSP rule optimization method according to any one of claims 1 to 11, the steps of the URSP rule optimization method according to any one of claims 12 to 19, the steps of the URSP rule optimization method according to any one of claims 20 to 26, the steps of the URSP rule optimization method according to any one of claims 27 to 32, or the steps of the URSP rule optimization method according to any one of claims 33 to 35.
